# EUROPÄISCHE PATENTSCHRIFT

(11) **EP 1 008 297 B1**
(45) Veröffentlichungstag und Bekanntmachung des Hinweises auf die Patenterteilung: **19.03.2003**
(21) Anmeldenummer: 00100473.8
(22) Anmeldetag: 17.12.1991
(51) Int. Cl.: A01N 47/36, A01N 43/50, A01N 25/32

(54) **Mischungen aus Herbiziden und Antidots**
Mixtures of herbicides and antidotes
Mélanges d'herbicides et d'antidotes

(30) Priorität: 21.12.1990 DE 4041120
(43) Veröffentlichungstag der Anmeldung: 14.06.2000
(62) Teilanmeldung aus: 91121623.2
(73) Patentinhaber: Bayer CropScience GmbH, 65929 Frankfurt/Main (DE)
(72) Erfinder: Bauer, Klaus, Dr., 63456 Hanau (DE); Bieringer, Hermann, Dr., 65817 Eppstein (DE)

(56) Entgegenhaltungen:
- EP-A- 0 147 365
- EP-A- 0 174 562
- EP-A- 0 268 554
- EP-A- 0 333 131

## Beschreibung

Die Erfindung betrifft das technische Gebiet der Pflanzenschutzmittel, insbesondere Wirkstoff-Antidot-Kombinationen, die hervorragend für den Einsatz gegen Schadpflanzen in Nutzpflanzenkulturen geeignet sind.

Einige neuere herbizide Wirkstoffe haben sehr gute Wirksamkeiten und Selektivitäten und können gegen ein weites Spektrum verschiedener Unkräuter und/oder Ungräser in speziellen Kulturpflanzenbeständen wie Sojabohne oder Mais oder Getreide eingesetzt werden. Andere Kulturpflanzen jedoch werden durch diese Herbizide geschädigt, so dass der Einsatz in solchen Kulturen gar nicht möglich ist oder doch nur in geringen Aufwandmengen, die nicht die optimale breite herbizide Wirksamkeit gewährleisten.

Solche Herbizide, deren Einsatzmöglichkeit beschränkt ist, sind beispielsweise einige Herbizide aus der Gruppe der Sulfonylharnstoffe und Imidazolinone. Herbizide dieser zwei Strukturgruppen sind insoweit verwandt, als sie in der Pflanze zum Teil gleiche Biosynthesewege im Stoffwechsel blockieren. Beide Herbizidklassen hemmen primär das Enzym Acetolactatsynthase (ALS), auch Acetohydroxysäuresynthase (AHAS) genannt, ein wichtiges Schlüsselenzym, das bei der Biosynthese der verzweigtkettigen Aminosäuren Valin, Leucin und Isoleucin eine wichtige Rolle spielt (siehe z. B. Dale L. Shaner et al.: Imidazolinones, Potent Inhibitors of Acetohydroxyacid Synthase, Plant. Physiol. 76 (1984) 545-546; E.M. Beyer et al. "Sulfonylurea Herbicides" in "Herbicides: Chemistry, Degradation and Mode of Action" Vol. 3, M. Dekker, Inc., Ed. by P.G. Kearney and D.D. Kaufmann, New York, 1987).
Obwohl Imidazolinone und Sulfonylharnstoffe hinsichtlich anderer Eigenschaften wie Aufwandmenge, Bodenwirksamkeit etc. sehr verschieden sind, so dass ein Äquivalenz nicht gegeben ist, können die Herbizide aus diesen Stoffklassen auf Grund des zum Teil gleichartigen Wirkungsmechanismus im pflanzlichen Stoffwechsel gemeinsame Eigenschaften aufweisen. So können beispielsweise viele Herbizide der genannten Stoffklassen nicht selektiv in Getreidekulturen und/oder nicht in Mais eingesetzt werden, weil diese Kulturpflanzen zumindest in den erwünschten Dosierungen, die für eine breite herbizide Wirksamkeit gegen Unkräuter und Ungräser erforderlich sind, geschädigt werden.

Es wäre wünschenswert, wenn man die genannten Kulturpflanzen mit Hilfe eines Safeners (oder Antidots) vor der schädigenden Wirkung der genannten Herbizide schützen könnte, ohne die Wirkung der genannten Herbizide gegen die Schadpflanzen wesentlich zu vermindern.

Es sind bereits eine große Zahl struktruell unterschiedlichster Safener bekannt, die in Kombination mit Herbiziden eingesetzt werden. Für die Kombination mit Sulfonylharnstoffen oder Imidazolinonen in Getreidekulturen (z. B. Weizen, Gerste) oder Mais sind diese meist jedoch nicht geeignet.

Aus EP-A-94349 sind Safener der Chinolin-8-oxy-alkancarbonsäure-Reihe bekannt, die vor allem für den Einsatz mit Aryloxy- und Heteroaryloxy-phenoxycarbonsäure-Herbiziden empfohlen werden. Sulfonylharnstoffe werden darin unter einer Vielzahl von strukturell anderen Herbiziden als mögliche Herbizide für die Kombination mit den Safenern erwähnt; zwei Beispiele, wobei Weizensamen mit einem Chinolinoxyessigsäuremethylester gebeizt und die Anbaufläche mit einem Sulfonylharnstoff im Nachauflaufverfahren bzw. im Vorauflaufverfahren behandelt werden, sind auch erwähnt. Die Safener-Wirkung der bekannten Sulfonylharnstoff-Safener-Kombination ist jedoch nicht ausreichend, insbesondere nicht für den Einsatz des Safeners und des Herbizids im Nachauflaufverfahren in Getreide, wie Weizen oder Gerste, oder in Mais.

Aus US-A-4851031 ist bekannt, Imidazolinon-Herbizide wie Imazaquin, Imazapyr oder Imazethapyr mit Safenern aus der Chinolin-8-oxy-alkancarbonsäure-Reihe zur Bekämpfung von Unkräutern in Getreide einzusetzen, und zwar vorzugsweise nach dem Verfahren der Saatbeizung, aber auch durch Blattapplikation (Nachauflaufapplikation) von Sapener und Herbizid gemeinsam. Andere Kulturpflanzen wie Mais werden dabei nur nach der Technik der Saatbeizung mit konkretem Beispiel aufgeführt.

Aus dem Artikel von M. Barrett in "Crop Safeners for Herbizides" von K.K. Hatzios und R.E. Hoagland (Editors) Academic Press, San Diego, CA. USA 1989, Kap. 9, S. 209-220 und dem Artikel von K. K. Hatzios in "Herbicides Resistance in Weeds and Crops" (Editors: J.C. Caseley, G. W. Cussans, R.K. Atkin) Butterworth-Heinemann, Oxford, GB 1991, S. 293-303 ist bekannt, daß die Schutzwirkung von Safenem gegen Herbizidschäden der Imidazolinone besser ist, wenn die Herbizide postemergent, die Safener aber vorher als Saatbeizmittel oder zur Aussaat der Kultur (pre-emergent) eingesetzt werden. Safenerwirkungen, die nach der Methode der Saatbeizung erreicht worden sind, lassen deshalb nicht erwarten, daß bei Einsatz des Safeners zusammen mit dem Herbizid im Nachauflaufverfahren eine vergleichbar effektive oder bessere Safenerwirkung erreicht werden kann.

Ganz unerwartet haben nun experimentelle Arbeiten gezeigt, daß Kulturpflanzen wie z. B. Weizen und Gerste sowie Mais vor unerwünschten Schäden der oben erwähnten Herbizide geschützt werden können, wenn sie zusammen mit bestimmten Verbindungen ausgebracht werden, die als herbizide Antidots oder Safener wirken. Weiterhin wurde gefunden, daß Imidazolinone und bestimmte Safener der Chinolin-8-oxy-alkancarbonsäure-Reihe besonders für die selektive Bekämpfung von Schadpflanzen in Maiskulturen im Nachauflaufverfahren geeignet sind.

Gegenstand der Erfindung sind daher herbizide Mittel, welche
A) ein oder mehrere Herbizide aus der Gruppe der Sulfonylharnstoffe und Imidazolinone und
B) eine oder mehrere Verbindungen der Formal B1, 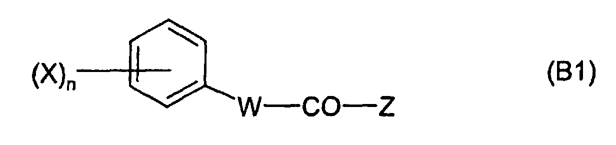
worin
- X: Wasserstoff, Halogen, C₁-C₄-Alkyl, C₁-C₄-Alkoxy, Nitro oder C₁-C₄-Halogenalkyl ist,
- Z: OR¹, SR¹ oder NR¹R, vorzugsweise einen Rest der Formel OR¹, NHR¹ oder N(CH₃), insbesondere der Formel OR¹ ist,
- R: unabhängig von R¹ Wasserstoff, C₁-C₆-Alkyl, C₁-C₆-Alkoxy oder Phenyl oder substituiertes Phenyl ist oder
- R und R¹: gemeinsam mit dem an sie gebundenen N-Atom einen gesättigten oder ungesättigten 3- bis 7-gliedrigen Heterocyclus mit mindestens einem N-Atom und bis zu 3 Heteroatomen bedeuten, der unsubstituiert oder durch Reste aus der Gruppe C₁-C₄-Alkyl, C₁-C₄-Alkoxy, Phenyl oder substituiertes Phenyl substituiert ist,
- R¹: unabhängig von R Wasserstoff, C₁-C₁₈-Alkyl, C₃-C₁₂-Cycloalkyl, C₂-C₈-Alkenyl oder C₂-C₈-Alkinyl ist,
wobei jeder vorstehenden C-haltigen Reste unabhängig voneinander unsubstituiert oder ein- oder mehrfach durch Reste aus der Gruppe enthaltend Halogen, Hydroxy, C₁-C₈-Alkoxy, C₁-C₈-Alkylthio, C₂-C₈-Alkenylthio, C₂-C₈-Alkinylthio, C₂-C₈-Alkenyloxy, C₂-C₈-Alkinyloxy, C₃-C₇-Cycloalkyl, C₃-C₇-Cycloalkoxy, Cyano, Mono- und Di-(C₁-C₄-alkyl)-amino, (C₁-C₈-Alkoxy)-carbonyl, (C₂-C₈-Alkenyloxy)-carbonyl, (C₁-C₈-Alkylthio)-carbonyl, (C₂-C₈-Alkinyloxy)-carbonyl, (C₁-C₈-Alkyl)-carbonyl, (C₂-C₈-Alkenyl)-carbonyl, (C₂-C₈-Alkenyl)-carbonyl, 1-(Hydroxyimino)-C₁-C₆-alkyl, 1-(C₁-C₄-Alkylimino)-C₁-C₆-alkyl, 1-(C₁-C₄-Alkoxyimino)-C₁-C₆-alkyl, (C₁-C₈-Alkyl)-carbonylamino, (C₂-C₈-Alkenyl)-carbonylamino, (C₂-C₈-Alkinyl)-carbonylamino, Aminocarbonyl, (C₁-C₈-Alkyl)-aminocarbonyl, Di-(C₁-C₆-alkyl)-aminocarbonyl, (C₂-C₆-Alkenyl)-aminocarbonyl, (C₂-C₆-Alkinyl)-aminocarbonyl, (C₁-C₈-Alkoxy)-carbonylamino, (C₁-C₈-Alkyl)-amino-carbonylamino, C₁-C₆-Alkylcarbonyloxy, das unsubstituiert oder durch Halogen, NO₂, C₁-C₄-Alkoxy oder gegebenenfalls substituiertes Phenyl substituiert ist, (C₂-C₆-Alkenyl)-carbonyloxy, (C₂-C₆-Alkinyl)-carbonyloxy,C₁-C₈-Alkylsulfonyl, Phenyl, Phenyl-C₁-C₆-alkoxy, Phenyl-(C₁-C₆-alkoxy)-carbonyl, Phenoxy, Phenoxy-C₁-C₆-alkoxy, Phenoxy-(C₁-C₆-alkoxy)-carbonyl, Phenylcarbonyloxy, Phenylcarbonylamino, Phenyl-(C₁-C₆alkyl)-carbonylamino, wobei die letztgenannten 9 Reste im Phenylring unsubstituiert oder ein- oder mehrfach durch Reste aus der Gruppe Halogen, C₁-C₄-Alkyl, C₁-C₄-Alkoxy, C₁-C₄-Halogenalkyl, C₁-C₄-Halogenalkoxy und Nitro substituiert sind, und Reste der Formeln -SiR'₃, -O-SiR'₃, (R')₃Si-C₁-C₆-alkoxy, -CO-O-NR'₂, -O-N=CR'₂, -N=CR'₂, -O-NR'₂, -CH(OR')₂ und -O-(CH₂)ₘ-CH(OR')₂, worin die R' in den genannten Formeln unabhängig voneinander Wasserstoff, C₁-C₄-Alkyl oder Phenyl, das unsubstituiert oder ein- oder mehrfach durch Reste aus der Gruppe Halogen, C₁-C₄-Alkyl, C₁-C₄-Alkoxy, C₁-C₄-Halogenalkyl, C₁-C₄-Halogenalkoxy und Nitro substituiert ist, oder paarweise eine C₂-C₆-Alkylenkette und m = 0 bis 6 bedeuten, und einen Alkoxyrest der Formel R"O-CHR"'(OR")-C₁-C₆-alkoxy, worin die R" unabhängig voneinander C₁-C₄-Alkyl oder zusammen eine C₁-C₆-Alkylengruppe und R"' Wasserstoff oder C₁-C₄-Alkyl bedeuten, substituiert ist,
- n: eine ganze Zahl von 1 bis 5, vorzugsweise 1 bis 3 ist und
- W: ein divalenter heterocyclischer Rest mit 5 Ringatomen der Formel W1 bis W3 ist, 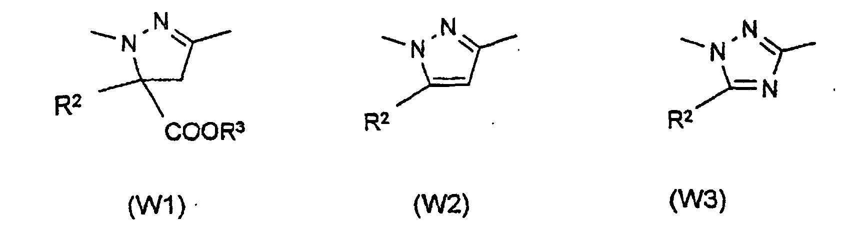 worin
- R²: Wasserstoff, C₁-C₈-Alkyl, C₁-C₈-Haloalkyl, C₃-C₁₂-Cycloalkyl oder gegebenfalls substituiertes Phenyl und
- R³: Wasserstoff, C₁-C₈-Alkyl, C₁-C₈-Haloalkyl, (C₁-C₄-Alkoxy)-C₁-C₄-alkyl, C₁-C₆-Hydroxyalkyl, C₃-C₁₂-Cycloalkyl oder Tri-(C₁-C₄-alkyl)-silyl sind,
in einer wirksamen Menge enthalten.

Von besonderem Interesse sind erfindungsgemäße herbizide Mittel, wobei in den Verbindungen der Formel B1,
- R¹: Wasserstoff, C₁-C₁₂-Alkyl, C₃-C₇-Cycloalkyl, C₂-C₈-Alkenyl oder C₂-C₈-Alkinyl ist,
wobei jeder der vorstehenden C-haltigen Reste unabhängig voneinander unsubstituiert oder ein- oder mehrfach durch Halogen oder ein- oder zweifach, vorzugsweise bis zu einfach durch Reste aus der Gruppe enthaltend Hydroxy, C₁-C₄-Alkoxy, C₁-C₄-Alkylthio, C₂-C₄-Alkenyloxy, C₂-C₄-Alkinyloxy, Mono- und Di-(C₁-C₂-alkyl)-amino, (C₁-C₄-Alkoxy)-carbonyl, (C₂-C₄-Alkenyloxy)-carbonyl, (C₂-C₄-Alkinyloxy)-carbonyl, (C₁-C₄-Alkyl)-carbonyl, (C₂-C₄-Alkenyl)-carbonyl, (C₂-C₄-Alkinyl)-carbonyl, 1-(Hydroxyimino)-C₁-C₄-alkyl, 1-(C₁-C₄-Alkylimino)-C₁-C₄-alkyl, 1-(C₁-C₄-Alkoxyimino)-C₁-C₄-alkyl, C₁-C₄-Alkylsulfonyl, Phenyl, Phenyl-C₁-C₄-alkoxy, Phenyl-(C₁-C₄-alkoxy)-carbonyl, Phenoxy, Phenoxy-C₁-C₄-alkoxy, Phenoxy-(C₁-C₄-alkoxy)-carbonyl, wobei die letztgenannten 6 Reste im Phenylring unsubstituiert oder ein- oder mehrfach durch Reste aus der Gruppe Halogen, C₁-C₂-Alkyl, C₁-C₂-Alkoxy, C₁-C₂-Halogenalkyl, C₁-C₂-Halogenalkoxy und Nitro substituiert sind, und Reste der Formeln -SiR'₃, -O-N=CR'₂, -N=CR'₂ und -O-NR'₂, worin die R' in den genannten Formeln unabhängig voneinander Wasserstoff, C₁-C₂-Alkyl oder Phenyl, das unsubstituiert oder ein- oder mehrfach durch Reste aus der Gruppe Halogen, C₁-C₂-Alkyl, C₁-C₂-Alkoxy, C₁-C₂-Halogenalkyl, C₁-C₂-Halogenalkoxy und Nitro substituiert ist, oder paarweise eine C₄-C₅-Alkylenkette bedeuten, substituiert ist.

Von besonderem Interesse sind auch erfindungsgemäße herbizide Mittel, wobei in den Verbindungen der Formel B1,
- X: Wasserstoff, Halogen, Methyl, Ethyl, Methoxy, Ethoxy oder C₁-C₂-Halogenalkyl, vorzugsweise Wasserstoff, Halogen oder C₁-C₂-Halogenalkyl bedeutet.

Bevorzugt sind erfindungsgemäße herbizide Mittel, wobei in den Verbindungen der Formel B1,
- X: Wasserstoff, Halogen, Nitro oder C₁-C₄-Halogenalkyl ist,
- n: eine Zahl von 1 bis 3 ist,
- Z: ein Rest der Formel OR¹ ist,
- R¹: Wasserstoff, C₁-C₈-Alkyl oder C₃-C₇-Cycloalkyl ist,
wobei jeder der vorstehenden C-haltigen Reste unabhängig voneinander unsubstituiert oder ein- oder mehrfach durch Reste aus der Gruppe Halogen oder ein- oder zweifach, vorzugsweise unsubstituiert oder einfach, durch Reste aus der Gruppe Hydroxy, C₁-C₄-Alkoxy, (C₁-C₄-Alkoxy)-carbonyl, C₂-C₆-Alkenyloxy-carbonyl, (C₂-C₆-Alkinyloxy)-carbonyl, 1-(Hydroxyimino)-C₁-C₄alkyl, 1-(C₁-C₄-Alkylimino)-C₁-C₄-alkyl, 1-(C₁-C₄-Alkoxyimino)-C₁-C₄-alkyl, und Reste der Formeln -SiR'₃, -O-N=CR'₂, -N=CR'₂ und -O-NR'₂, worin die R' in den genannten Formeln unabhängig voneinander Wasserstoff oder C₁-C₄-Alkyl oder paarweise eine C₄-C₅-Alkylenkette bedeuten, substituiert ist,
- R²: Wasserstoff, C₁-C₈-Alkyl, C₁-C₆-Haloalkyl, C₃-C₇-Cycloalkyl oder Phenyl ist und
- R³: Wasserstoff, C₁-C₈-Alkyl, C₁-C₈-Haloalkyl, (C₁-C₄-Alkoxy)-C₁-C₄-alkyl, C₁-C₆-Hydroxyalkyl, C₃-C₇-Cycloalkyl oder Tri-(C₁-C₄-alkyl)-silyl ist.

Besonders bevorzugt sind erfindungsgemäße herbizide Mittel mit Verbindungen der Formel B1, worin
- W: W1,
- X: H, Halogen oder C₁-C₂-Halogenalkyl und n = 1-3, insbesondere (X)ₙ = 2,4-Cl₂,
- Z: ein Rest der Formel OR¹,
- R¹: Wasserstoff, C₁-C₈-Alkyl, C₁-C₈-Haloalkyl C₁-C₄-Hydroxyalkyl, C₃-C₇-Cycloalkyl, (C₁-C₄-Alkoxy)-C₁-C₄-alkyl, Tri-(C₁-C₂-alkyl)-silyl, vorzugsweise C₁-C₄-Alkyl,
- R²: Wasserstoff, C₁-C₈-Alkyl, C₁-C₄-Haloalkyl oder C₃-C₇-Cyctoalkyl, vorzugsweise Wasserstoff oder C₁-C₄-Alkyl, und
- R³: xWasserstoff, C₁-C₈-Alkyl, C₁-C₄-Haloalkyl, C₁-C₄-Hydroxyalkyl, C₃-C₇-Cycloalkyl, (C₁-C₄-Alkoxy)-C₁-C₄-alkyl oder Tri-(C₁-C₂-alkyl)-silyl, vorzugsweise H oder C₁-C₄-Alkyl,
bedeuten.

Besonders bevorzugt sind auch erfindungsgemäße herbizide Mittel mit Verbindungen der Formel B1, worin
- W: W2,
- X: H, Halogen oder C₁-C₂-Halogenalkyl und n = 1-3, insbesondere (X)ₙ = 2,4-Cl₂,
- Z: ein Rest der Formel OR¹,
- R¹: Wasserstoff, C₁-C₈-Alkyl, C₁-C₄-Haloalkyl, C₁-C₄-Hydroxyalkyl, C₃-C₇-Cycloalkyl, (C₁-C₄-Alkoxy)-C₁-C₄-alkyl, Tri-(C₁-C₂-alkyl)-silyl, vorzugsweise C₁-C₄-Alkyl und
- R²: Wasserstoff, C₁-C₈-Alkyl, C₁-C₄-Haloalkyl, C₃-C₇-Cycloalkyl oder Phenyl, vorzugsweise Wasserstoff oder C₁-C₄-Alkyl,
bedeuten.

Besonders bevorzugt sind auch erfindungsgemäße herbizide Mittel mit Verbindungen der Formel B1, worin
- W: W3,
- X: H, Halogen oder C₁-C₂-Halogenalkyl und n = 1-3, insbesondere (X)ₙ = 2,4-Cl₂,
- Z: ein Rest der Formel OR¹,
- R¹: Wasserstoff, C₁-C₈-Alkyl, C₁-C₄-Haloalkyl, C₁-C₄-Hydroxyalkyl, C₃-C₇-Cycloalkyl, (C₁-C₄-Alkoxy)-C₁-C₄-alkyl, Tri-(C₁-C₂-alkyl)-silyl, vorzugsweise C₁-C₄-Alkyl und
- R²: C₁-C₈-Alkyl oder C₁-C₄-Haloalkyl, vorzugsweise C₁-Haloalkyl,
bedeuten.

In den Formeln sind Alkyl, Alkenyl und Alkinyl geradkettig oder verzweigt; entsprechendes gilt für substituierten Alkyl-, Alkenyl- und Alkinylreste wie Haloalkyl, Hydroxyalkyl, Alkoxycarbonyl etc.; Alkyl bedeutet z. B. Methyl, Ethyl, n- und i-Propyl, n-, i-, t- und 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl bedeutet z. B. Allyl, 1-Methylprop-2-en-1-yl, But-2-en-1-yl, But-3-en-1-yl, 1-Methylbut-3-en und 1-Methyl-but-2-en; Alkinyl bedeutet z. B. Propargyl, But-2-in-1-yl, But-3-in-1-yl, 1-Methyl-but-3-in; Halogen bedeutet Fluor, Chlor, Brom oder lod, vorzugsweise Fluor, Chlor oder Brom, besonders Fluor oder Chlor; Haloalkyl, -alkenyl und -alkinyl bedeuten durch Halogen substituiertes Alkyl, Alkenyl bzw. Alkinyl, z. B. CF₃, CHF₂, CH₂F, CF₃CF₂, CH₂FCHCl, CCl₃, CHCl₂, CH₂CH₂Cl; Haloalkoxy ist z. B. OCF₃, OCHF₂, OCH₂F, CF₃CF₂O, CF₃CH₂O; gegebenenfalls substituiertes Phenyl ist Phenyl oder substituiertes Phenyl; substituiertes Phenyl ist Phenyl, das ein- oder mehrfach durch Reste aus der Gruppe Halogen, C₁-C₄-Alkyl, C₁-C₄-Alkoxy, C₁-C₄-Halogenalkyl, C₁-C₄-Halogenalkoxy und Nitro substituiert ist, z. B. o-, m- und p-Tolyl, Dimethylphenyle, 2-, 3- und 4-Chlorphenyl, 2-, 3- und 4-Trifluor- und -Trichlorphenyl, 2,4-, 3,5-, 2,5- und 2,3-Dichlorphenyl, o-, m- und p-Methoxyphenyl.

Die Verbindungen der Formel B1 sind aus EP-A-0333131 (ZA-89/1960), EP-A-0269806 (US-A-4,891,057), EP-A-0346620 (AU-A-89/34951) und WO-91/07874 (Internationale Patentanmeldung Nr. PCT/EP 90/02020) und dort zitierter Literatur bekannt oder können nach oder analog den dort beschriebenen Verfahren hergestellt werden. Die Verbindungen der Formel B2 sind aus EP-A-94349 (USA4,902,340), EP-A-0191736 (US-A-4,881,966) und der Deutschen Patentanmeldung P 4041121.4 und dort zitierter Literatur bekannt oder können nach oder analog den dort beschriebenen Verfahren hergestellt werden.

Als Herbizide des Typs A eignen sich erfindungsgemäß Sulfonylharnstoffderivate, die allein nicht oder nicht optimal in Getreidekulturen und/oder Mais eingesetzt werden können, weil sie die Kulturpflanzen zu stark schädigen. Solche Sulfonylharnstoffe sind z. B.
1) Phenylsulfonylharnstoffe, wie z. B.
   a) Chlorimuron-ethyl (siehe Agricultural Chemicals Book II "Herbicides" by W. T. Thompson, Thompson Publications, Fresno Califomien, USA 1990, Seite 152); wird bisher in Sojabohnen, nicht jedoch in Getreide oder Mais eingesetzt;
   b) Primisulfuron (CGA 136 872, siehe Brighton Crop Prot. Conf.- Weeds - 1989, S. 41 - 48),
   c) 3-(4-Ethyl-6-methoxy-1,3,5-triazin-2-yl)-1-(2,3-dihydro-1,1-dioxo-2-methylbenzo[b]thiophen-7-sulfonyl)-harnstoff (siehe EP-A-79 683),
   d) 3-(4-Ethoxy-6-ethyl-1,3,5-triazin-2-yl)-1-(2,3-dihydro-1,1-dioxo-2-methylbenzo[b]thiophen-7-sulfonyl)-harnstoff (siehe EP-A-79 683),
   e) Tribenuron-methyl (siehe "The Pesticide Manual", British Crop Protection Council 9th Edition (1990/91), Seite 840),
   f) Metsulfuron-methyl (siehe Proc. Int. Congr. Plant Prot., 10th, 1983, Vol. 1, 324),
   g) Chlorsulfuron (siehe US-P 4 127 405; Weeds Weed Control, 1980, 21st, 24),
   h) Triasulfuron (siehe "The Pesticide Manual" 9th Ed., S. 837) und
   i) Sulfometuron-methyl (siehe "The Pesticide Manual" 9th Ed., S. 774);
2) Thienylsulfonylharnstoffe wie z. B.
   Thifensulfuron-methyl (siehe Agricultural Chemicals Book II "Herbicides" by W. T. Thompson, Thompson Publications, Fresno Californien, USA 1990, Seite 155);
3) Pyrazolylsulfonylharnstoffe wie z. B.
   a) Pyrazosulfuron-ethyl (NC 311, siehe "The Pesticide Manual" 9th Ed., S. 735) und
   b) Methyl-3-chlor-5-(4,6-dimethoxypyrimidin-2-ylcarbamoylsulfamoyl)-1-methyl-pyrazol-4-carboxylat (siehe EP 282 613);
4) Sulfondiamid-Derivate wie z. B. Amidosulfuron und Strukturanaloge (siehe EP-A-0131258 und Z. Pfl.Krankh. Pfl.Schutz, Sonderheft XII, 489-497(1990); wird bisher nicht in Mais eingesetzt;
5) Pyridylsulfonylharnstoffe wie z. B.
   a) Nicosulfuron (SL-950, siehe Kimura et al., Brighton Crop Protection Conference - Weeds- 1989, S. 29 - 34); wird alleine nicht in Getreide eingesetzt;
   b) DPX-E 9636 (siehe Brighton Crop Prot. Conf. - Weeds -1989, S. 23 ff.); wird bisher nicht in Getreide eingesetzt;
   c) Pyridylsulfonylharnstoffe, wie sie in den deutschen Patentanmeldungen P 4000503.8 (WO-91/10660) und EP-A-0492366 beschrieben sind, vorzugsweise solche der Formel A1 oder deren Salze, 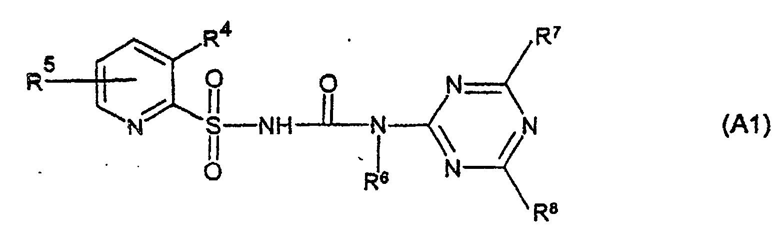 worin
      - E: CH oder N, vorzugsweise CH,
      - R⁴: lod oder NR⁹R¹⁰,
      - R⁵: H, Halogen, Cyano, C₁-C₃-Alkyl, C₁-C₃-Alkoxy, C₁-C₃-Haloalkyl, C₁-C₃-Haloalkoxy, C₁-C₃-Alkylthio, (C₁-C₃-Alkoxy)-C₁-C₃-alkyl, (C₁-C₃-Alkoxy)-carbonyl, Mono- oder Di-(C₁-C₃-alkyl)-amino, C₁-C₃-Alkyl-sulfinyl oder -sulfonyl, SO₂-NR^{a}R^{b} oder CO-NR^{a}R^{b}, insbesondere H,
      - R^{a},R^{b}: unabhängig voneinander H, C₁-C₃-Alkyl, C₁-C₃-Alkenyl, C₁-C₃-Alkinyl oder zusammen -(CH₂)₄-, -(CH₂)₅- oder -(CH₂)₂-O-(CH₂)₂-,
      - R⁶: H oder CH₃,
      - R⁷: Halogen, C₁-C₂-Alkyl, C₁-C₂-Alkoxy, C₁-C₂-Haloalkyl, vorzugsweise CF₃, C₁-C₂-Haloalkoxy, vorzugsweise OCHF₂ oder OCH₂CF₃,
      - R⁸: C₁-C₂-Alkyl, C₁-C₂-Haloalkoxy, vorzugsweise OCHF₂, oder C₁-C₂-Alkoxy, und
      - R⁹: C₁-C₄-Alkyl und R¹⁰ C₁-C₄-Alkylsulfonyl oder R⁹ und R¹⁰ gemeinsam eine Kette der Formel -(CH₂)₃SO₂- oder -(CH₂)₄SO₂-
   bedeuten,
6) Phenoxysulfonylharnstoffe, wie z.B. sie aus EP-A-0342569, EP-A-4163, EP-A-113956, US-A-4,678,500 und US-A-4,581,059 bekannt sind, vorzugsweise Alkoxyphenoxysulfonylharnstoffe der Formel A2 oder deren Salze, 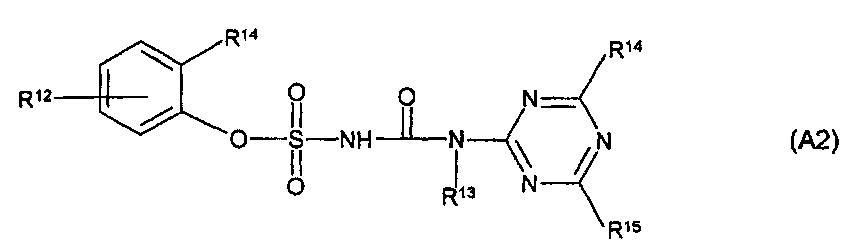 worin
   - E: CH oder N, vorzugsweise CH,
   - R¹¹: Ethoxy, Propoxy oder Isopropoxy,
   - R¹²: Wasserstoff, Halogen, NO₂, CF₃, CN, C₁-C₄-Alkyl, C₁-C₄-Alkoxy, C₁-C₄-Alkylthio oder (C₁-C₃-Alkoxy)-carbonyl, vorzugsweise in 6-Position am Phenylring,
   - n: 1, 2 oder 3, vorzugsweise 1,
   - R¹³: Wasserstoff, C₁-C₄-Alkyl oder C₃-C₄-Alkenyl,
   - R¹⁴, R¹⁵: unabhängig voneinander Halogen, C₁-C₂-Alkyl, C₁-C₂-Alkoxy, C₁-C₂-Haloalkyl, C₁-C₂-Haloalkoxy oder (C₁-C₂-Alkoxy)-C₁-C₂-alkyl, vorzugsweise OCH₃ oder CH₃, bedeuten,
   und andere verwandte Sulfonylharnstoffderivate und Mischungen daraus.
   Als Herbizide des Typs A eignen sich erfindungsgemäß auch Wirkstoffe aus der Gruppe der Imidazolinon-Derivate, die auf Grund ihrer Selektivität in einigen Kulturen wie beispielsweise in Sojabohnen gut verträglich sind, nicht jedoch in Getreide- und/oder Maiskulturen eingesetzt werden können. Solche Wirkstoffe sind z.B.
7) Imazethapyr (siehe Ch. R. Worthing's "The Pesticide Manual" 8th Edition 1987, by British Crop Protection Council, Seite 473),
8) Imazaquin (siehe Ch. R. Worthing's "The Pesticide Manual" 8th Edition 1987, by British Crop Protection Council, Seite 474),
9) Imazethamethapyr (chemical name: rac-2-[4,5-dihydro-4-methyl-4-(1-methylethyl)-5-oxo-1 H-imidazol-2-yl]-5-methyl-3-pyridine-carboxylic acid; siehe Weed Techn. 1991 (5), 430-433 und 434-438) und
andere verwandte Verbindungen und Mischungen daraus.

Auch Mischungen aus verschiedenen Sulfonylharnstoffderivaten und/oder verschiedenen Imidazolinonen sind erfindungsgemäß geeignet.

Folgende Gruppen von Verbindungen haben sich als Safener für die oben erwähnten Herbizide bewährt:
a) Verbindungen vom Typ der Dichlorphenylpyrazolin-3-carbonsäure (d. h. der Formel B1, worin W = W1 und (X)ₙ = 2,4-Cl₂), vorzugsweise Verbindungen wie
   - (B1-1): 1-(2,4-dichlorphenyl)-5-(ethoxycarbonyl)-5-methyl-2-pyrazolin-3-carbonsäureethylester und verwandte Verbindungen, wie sie in der WO-91-/07874 (Int. Patentanmeldung Nr. PCT/EP 90/02020) beschrieben sind,
b) Derivate der Dichlorphenylpyrazolcarbonsäure (d. h. der Formel B1, worin W = W2 und (X)ₙ = 2,4-Cl₂), vorzugsweise Verbindungen wie
   - (B1-2): 1-(2,4-dichlorphenyl)-5- methyl-pyrazol-3-carbonsäureethylester,
   - (B1-3): 1-(2,4-dichlorphenyl)-5- isopropyl-pyrazol-3-carbonsäureethylester,
   - (B1-4): 1-(2,4-dichlorphenyl)-5-(1,1-dimethyl-ethyl)-pyrazol-3-carbonsäureethylester,
   - (B1-5): 1-(2,4-dichlorphenyl)-5-phenyl-pyrazol-3-carbonsäureethylester,
   und verwandte Verbindungen, wie sie in EP-A-0 333 131 und EP-A-0 269 806 beschrieben sind.
c) Verbindungen vom Typ der Triazolcarbonsäuren (d. h. der Formel B1, worin W = W3 und (X)ₙ = 2,4-Cl₂), vorzugsweise Verbindungen wie
   - (B1-6): 1-(2,4-dichlorphenyl)-5-trichlormethyl-(1 H)-1,2,4-triazol-3-carbonsäureethylester (Fenchlorazol)
   und verwandte Verbindungen (siehe EP-A-0174562 und EP-A-0 346 620);
d) Verbindungen vom Typ der Dichlorphenylpyrazolin-3-carbonsäureester, z.B.
   - (B1-8): 1-(2,4-Dichlorphenyl)-pyrazolin-3-carbonsäureethylester-5-carbonsäure-t-butylester,
   wie sie in WO-91/07874 beschrieben sind,

Die Safener (Antidote) der vorstehenden Gruppen a) bis f) reduzieren oder unterbinden phytotoxische Effekte, die beim Einsatz der Herbizide A) in Nutzpflanzenkulturen auftreten können, ohne die Wirksamkeit dieser Herbizide gegen Schapflanzen zu beeinträchtigen. Hierdurch kann das Einsatzgebiet herkömmlicher Pflanzenschutzmittel ganz erheblich erweitert und z. B. auf Kulturen wie Weizen, Gerste, Mais und andere Gramineen-Kulturen ausgedehnt werden, in denen bisher ein Einsatz der Herbizide nicht möglich oder nur beschränkt, das heißt, in niedrigen Dosierungen mit wenig Breitenwirkung möglich war.

Die herbiziden Wirkstoffe und die erwähnten Safener können zusammen (als fertige Formulierung oder im Tank-mix-Verfahren) oder in beliebiger Reihenfolge nacheinander ausgebracht werden. Das Gewichtsverhältnis Safener:Herbizid kann innerhalb weiter Grenzen variieren und ist vorzugsweise im Bereich von 1:10 bis 10:1, insbesondere von 1:10 bis 5:1. Die jeweils optimalen Mengen an Herbizid und Safener sind vom Typ des verwendeten Herbizids oder vom verwendeten Safener sowie von der Art des zu behandelnden Pflanzenbestandes abhängig und lassen sich von Fall zu Fall durch entsprechende Vorversuche ermitteln.

Haupteinsatzgebiete für die Anwendung der Safener sind vor allem Getreidekulturen (Weizen, Roggen, Gerste, Hafer), Reis, Mais, Sorghum, aber auch Baumwolle und Sojabohne, vorzugsweise Getreide und Mais.

Die Safener vom Typ B können je nach ihren Eigenschaften zur Vorbehandlung des Saatgutes der Kulturpflanze (Beizung der Samen) verwendet werden oder vor der Saat in die Saatfurchen eingebracht oder zusammen mit dem Herbizid vor oder nach dem Auflaufen der Pflanzen angewendet werden. Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit dem Herbizid im Nachauflaufverfahren. Hierzu können Tankmischungen oder Fertigformulierungen eingesetzt werden.

Im Vergleich zur Methode mit Saatbeizung stellt die Methode mit gemeinsamer Anwendung von Herbizid und Safener im Nachauflaufverfahren einer bedeutenden praktischen Vorteil dar. Der Landwirt spart durch einen Arbeitsgang der gemeinsamen Ausbringung wesentliche Kosten und muß vor allem keine

arbeitsaufwendige Saatgutbeizung durchführen, wozu spezielles Beizgerät erfordertich ist. Der arbeitstechnische Aufwand für die zusätzliche Ausbringung des Safeners ist demgegenüber praktisch zu vernachlässigen, zumal wenn Herbizid und Safener als fertige Formulierung eingesetzt und ausgebracht werden.

Die benötigten Aufwandmengen der Safener können je nach Indikation und verwendetem Herbizid innerhalb weiter Grenzen schwanken und sind in der Regel im Bereich von 0,001 bis 5 kg, vorzugsweise 0,005 bis 0,5 kg Wirkstoff je Hektar.

Gegenstand der vorliegenden Erfindung ist deshalb auch ein Verfahren zum Schutz von Kulturpflanzen vor phytotoxischen Nebenwirkungen von Herbiziden des genannten Typs A), das dadurch gekennzeichnet ist, daß eine wirksame Menge einer Verbindung der genannten Formel (B1) vor, nach oder gleichzeitig mit dem Herbizid des genannten Typs A), vorzugsweise zusammen mit dem Herbizid des Typs A) im Nachauflaufverfahren, auf die Pflanzen, Pflanzensamen oder die Anbaufläche appliziert wird.

Die Verbindungen des Typs B) und deren Kombinationen mit einem oder mehreren der genannten Herbizide können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), emulgierbare Konzentrate (EC), wasserlösliche Pulver (SP), wasserlösliche Konzentrate (SL), konzentrierte Emulsionen (EW) wie Öl-in-Wasser und Wasser-in- Öl-Emulsionen, versprühbare Lösungen oder Emulsionen, Kapselsuspensionen (CS) Dispersionen auf Öl- oder Wasserbasis (SC), Suspoemulsionen, Suspensionskonzentrate, Stäubemittel (DP), ölmischbare Lösungen (OL), Beizmittel, Granulate (GR) in Form von Mikro-, Sprüh-, Aufzugs- und Adsorptionsgranulaten, Granulate für die Boden- bzw. Streuapplikation, wasserlösliche Granulate (SG), wasserdispergierbare Granulate (WG), ULV-Formulierungen, Mikrokapseln und Wachse.

Diese einzelnen Formulierungstypen sind im Prinzip bekannt und werden beispielsweise beschrieben in: Winnacker-Küchler, "Chemische Technologie" Band 7, C. Hauser Verlag München, 4. Aufl. 1986; Wade van Valkenburg, "Pesticide Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v.Olphen "Intruduction to Clay Colloid Chemistry", 2nd Ed., J. Wiley & Sons, N.Y., Marsden "Solvents Guide", 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler "Chemische Technolgie", Band 7, C. Hauser Verlag München, 4. Aufl. 1986.

Auf der Basis dieser Formulierungen lassen sich auch Kombinationen mit anderen pestizid wirksamen Stoffen, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Wirkstoff außer einem Verdünnungs- oder Inertstoff noch Netzmittel, z.B. polyoxethylierte Alkylphenole, polyoxethylierte Fettalkohole und Fettamine, Fettalkoholpolyglykolethersulfate, Alkansulfonate oder Alkylarylsulfonate und Dispergiermittel, z.B. ligninsulfonsaures Natrium, 2,2,-dinaphthylmethan-6,6'disulfonsaures Natrium, dibutylnaphthalinsulfonsaures Natrium oder auch oleylmethyltaurinsaures Natrium enthalten.

Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwendet werden: Alkylarylsulfonsaure Calzium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid Kondensationsprodukte (z.B. Blockpolymere), Alkylpolyether, Sorbitanfettsäureester, Polyoxyethylensorbitan fettsäureester oder Polyoxethylensorbitester.

Stäubemittel erhält man durch Vermahlen des Wirkstoffes mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Die agrochemischen Zubereitungen enthalten in der Regel 0,1 bis 99 Gewichtsprozent, insbesondere 0,1 bis 95 Gew.-%, Wirkstoffe der Typs B) oder des Antidot/Herbizid-Wirkstoffgemischs A) und B) und 1 bis 99,9 Gew.-%, insbesondere 5 bis 99,8 Gew.-%, eines festen oder flüssigen Zusatzstoffes und 0 bis 25 Gew.-%, insbesondere 0,1 bis 25 Gew.-%, eines Tensides.

In Spritzpulvern beträgt die Wirkstoffkonzentration z.B. etwa 10 bis 90 Gew.%, der Rest zu 100 Gew.-% besteht aus üblichen Formulierungsbestandteilen. Bei emulgierbaren Konzentraten beträgt die Wirkstoffkonzentration etwa 1 bis 80 Gew.-% Wirkstoffe. Staubförmige Formulierungen enthalten etwa 1 bis 20 Gew.-% an Wirkstoffen, versprühbare Lösungen etwa 0,2 bis 20 Gew.-% Wirkstoffe. Bei Granulaten wie wasserdispergierbaren Granulaten hängt der Wirkstoffgehalt zum Teil davon ab, ob die wirksame Verbindung flüssig oder fest vorliegt. In der Regel liegt der Gehalt bei den in Wasser dispergierbaren Granulaten zwischen 10 und 90 Gew.-%.
Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Granulate sowie versprühbare Lösungen werden vor der Anwendung üblicherweise nicht mehr mit weiteren inerten Stoffen verdünnt. Besonders gute Wirksamkeiten der erfindungsgemäßen Mittel können erzielt werden, wenn zusätzlich zu den in den Formulierungen enthaltenen Tensiden weitere Netzmittel in Konzentrationen von 0,1 bis 0,5 Gew.-% im Tank-mix-Verfahren zugesetzt werden, z. B. nichtionische Netzmittel oder Netzmittel vom Typ der Fettalkoholpolyolethersulfate (siehe z. B. Deutsche Patentanmeldung P 4029304.1). Mit den äußeren Bedingungen wie Temperatur, Feuchtigkeit, der Art des verwendeten Herbizids u.a. variiert die erforderliche Aufwandmenge der "Safener".

Folgende Beispiele dienen zur Erläuterung der Erfindung:

### A. Formulierungsbeispiele

a) Ein Stäubmittel wird erhalten, indem man 10 Gew.-Teile einer Verbindung des Typs B) oder eines Wirkstoffgemischs aus einem Herbizid vom Typ A) und einem Safener vom Typ B) und 90 Gew.-Teile Talkum als Inertstoff mischt und in einer Schlagmühle zerkleinert.
b) Ein in Wasser leicht dispergierbares, benetzbares Pulver wird erhalten, indem man 25 Gewichtsteile einer Verbindung des Typs B) oder eines Wirkstoffgemischs aus einem Herbizid vom Typ A) und einem Safener vom Typ B), 64 Gewichtsteile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.
c) Ein in Wasser leicht dispergierbares Dispersionskonzentrat wird erhalten, indem man 20 Gewichtsteile einer Verbindung des Typs B) oder eines Wirkstoffgemischs aus einem Herbizid vom Typ A) und einem Safener vom Typ B), 6 Gew.-Teilen Alkylphenolpolyglykolether (^{R}Triton X 207), 3 Gew.-Teilen Isotridecanolpolyglykolether (8 EO) und 71 Gew.- Teilen paraffinischem Mineralöl (Siedebereich z.B. ca. 255 bis über 277°C) mischt und in einer Reibkugelmühle auf eine Feinheit von unter 5 Mikron vermahlt.
d) Ein emulgierbares Konzentrat wird erhalten aus 15 Gew.-Teilen einer Verbindung des Typs B) oder eines Wirkstoffgemischs aus einem Herbizid vom Typ A) und einem Safener vom Typ B), 75 Gew.Teilen Cyclohexanon als Lösemittel und 10 Gew.-Teilen oxethyliertes Nonylphenol als Emulgator.
e) Ein in Wasser dispergierbares Granulat wird erhalten, indem man
   - 75 Gew.-Teile: einer Verbindung des Typs B) oder eines Wirkstoffgemischs aus Herbizid vom Typ A) und einem Safener vom Typ B),
   - 10 ": ligninsulfonsaures Calcium,
   - 5 ": Natriumlaurylsulfat,
   - 3 ": Polyvinylalkohol und
   - 7 ": Kaolin
   mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten, indem man
   - 25 Gew.-Teile: einer Verbindung des Typs B) oder eines Wirkstoffgemischs aus einem Herbizid vom Typ A) und einem Safener vom Typ B),
   - 5 ": 2,2'-dinaphthylmethan-6,6'-disulfonsaures Natrium,
   - 2 ": oleoylmethyltaurinsaures Natrium,
   - 1 Gew.-Teil: Polyvinylalkohol,
   - 17 Gew.-Teile: Calciumcarbonat und
   - 50 ": Wasser
   auf einer Kolloidmühle homogensiert und vorzerkleinert, anschließend auf einer Perlmühle mahlt und die so erhaltene Suspension in einem Sprühturm mittels einer Einstoffdüse zerstäubt und trocknet.

### B. Biologische Beispiele

Die Kulturpflanzen, Unkräuter und Ungräser wurden im Freiland oder im Gewächshaus in Plastiktöpfen bis zum 4- bis 5-Blattstadium herangezogen und dann erfindungsgemäß mit Verbindungen vom Typ A) und B) im Nachauflaufverfahren behandelt. Die Verbindungen vom Typ A) und B) wurden dabei in Form wäßriger Suspensionen bzw. Emulsionen mit einer Wasseraufwandmenge von umgerechnet 300 l/ha ausgebracht. 4 Wochen nach der Behandlung wurden die Pflanzen visuell auf jede Art von Schädigung durch die ausgebrachten Herbizide bonitiert, wobei insbesondere das Ausmaß der anhaltenden Wachstumshemmung berücksichtigt wurde. Die Bewertung erfolgte in Prozentwerten im Vergleich zu unbehandelten Kontrollen.

Die Ergebnisse der folgenden Tabellen veranschaulichen, dass die erfindungsgemäßen eingesetzten Verbindungen vom Typ B) starke Herbizidschäden an Kulturpflanzen effektiv reduzieren können. Selbst bei starken Überdosierungen der Herbizide werden bei den Kulturpflanzen auftretende schwere Schädigungen deutlich reduziert und geringere Schäden völlig aufgehoben. Mischungen aus Herbiziden und Verbindungen vom Typ B) eignen sich deshalb in ausgezeichneter Weise zur selektiven Unkrautbekämpfung in Kulturen wie Getreide und Mais.

### Beispiel 1

| Herbizid | Safener | Dosis [g AS/ha] | % Schädigung an Kulturpflanzen und Unkräutern | | | |
|---|---|---|---|---|---|---|
| | | | Weizen | Gerste | MAIN | STME |
| Chlorimuronethyl | -- | 100 | 70 | 60 | -- | -- |
| | | 50 | 65 | 55 | 99 | 99 |
| | | 25 | 55 | 50 | 99 | 93 |
| | | 12 | 45 | 45 | 98 | 93 |
| | | 6 | -- | -- | 97 | 80 |
| | | | | | | |
| " | + B1-5 | 100 + 100 | 0 | 10 | -- | -- |
| | | 50+50 | 0 | 0 | 99 | 95 |
| | | 25+25 | 0 | 0 | 99 | 92 |
| | | 12 + 12 | 0 | 0 | 97 | 88 |
| | | 6 + 6 | -- | -- | 93 | 90 |
| | | | | | | |
| " | + B1-2 | 100 + 100 | 10 | 30 | -- | -- |
| | | 50 + 50 | 0 | 10 | 99 | 97 |
| | | 25 + 25 | 0 | 0 | 99 | 92 |
| | | 12 + 12 | 0 | 0 | 99 | 90 |
| | | 6+6 | -- | -- | 98 | 80 |
| Abkürzungen: AS = Aktive Substanz (bezogen auf reinen Wirkstoff) MAIN = Matricaria inodora (Kamille) STME = Stellaria media (Vogelmiere) -- = nicht geprüft Applikationsbedingungen: Topfversuch im Freiland | | | | | | |

### Beispiel 2

| Herbizid | Safener | Dosis [g AS/ha] | % Schädigung an Kulturpflanzen und Unkräutern | | | |
|---|---|---|---|---|---|---|
| | | | Weizen | Gerste | ALMY | ECCR |
| Chlorimuronethyl | -- | 25 | 85 | 80 | 99 | 100 |
| | | 12 | 75 | 70 | 99 | 99 |
| | | 6 | 55 | 50 | 90 | 99 |
| | | 3 | 40 | 45 | 70 | 94 |
| | | | | | | |
| " | + B1-1 | 25 + 25 | 0 | 0 | 97 | 99 |
| | | 12 + 12 | 0 | 0 | 95 | 99 |
| | | 6 + 6 | 0 | 0 | 95 | 98 |
| | | 3 + 3 | 0 | 0 | 90 | 90 |
| Abkürzungen: AS = Aktive Substanz (bezogen auf reinen Wirkstoff) ALMY = Allopecurus myosuroides ECCR = Echinochloa crus-galli -- = nicht geprüft Applikationsbedingungen: Gewächshausversuch; Wachstumsstadium: Weizen: 3 - 4 Blätter, Gerste: 3 - 4 Blätter, ALMY: 21; ECCR: 21, d. h. Beginn der Bestockung. | | | | | | |

### Beispiel 3

| Herbizid | Safener | Dosis [g AS/ha] | % Schädigung an Kulturpflanzen und Unkräutern | | |
|---|---|---|---|---|---|
| | | | Weizen | Gerste | Digitaria sanguinalis (Fingerhirse) |
| Imazethapyr | -- | 400 | 100 | 100 | 95 |
| | | 200 | 100 | 95 | 95 |
| | | 100 | 100 | 95 | 95 |
| | | 50 | 100 | 90 | 90 |
| | | | | | |
| " | + B1-1 | 400 + 200 | 80 | 10 | 95 |
| | | 200 + 100 | 55 | 0 | 95 |
| | | 100 + 50 | 10 | 0 | 95 |
| | | 50 + 25 | 0 | 0 | 90 |
| | | | | | |
| " | + B1-4 | 400 + 200 | - | 90 | 95 |
| | | 200+100 | -- | 15 | 95 |
| | | 100 + 50 | -- | 10 | 93 |
| | | 50 + 25 | -- | 0 | 90 |
| Abkürzungen: AS = Aktive Substanz (bezogen auf reinen Wirkstoff) -- = nicht geprüft Applikationsbedingungen: Gewächshausversuch | | | | | |

### Beispiel 4 (Freilandtopversuch)

| Herbizid | Safener | Dosis [g AS/ha] | % Schädigung an Kulturpflanzen und Unkräutern | |
|---|---|---|---|---|
| | | | Mais | AMRE |
| Primisulfuron | | 100 | 50 | 100 |
| | | 50 | 25 | 98 |
| | | 25 | 10 | 90 |
| " | + B1-8 | 100 + 50 | 0 | 100 |
| | | 50 + 25 | 0 | 100 |
| | | 25 + 12 | 0 | 90 |
| Abkürzungen: Siehe Tabelle 4 | | | | |

### Beispiel 5

| Herbizid | Safener | Dosis [g AS/ha] | % Schädigung an Kulturpflanzen und Unkräutem | | |
|---|---|---|---|---|---|
| | | | Mais | AMRE | SEFA |
| Imazethapyr | -- | 200 | 60 | 90 | 100 |
| | | 100 | 30 | 90 | 98 |
| | | 50 | 20 | 75 | 95 |
| " | + B1-8 | 200 + 100 | 10 | 95 | 100 |
| | | 100 + 50 | 0 | 90 | 99 |
| | | 50 + 25 | 0 | 80 | 90 |
| Abkürzungen: Siehe Tabelle zu Beispiel 4 | | | | | |

### Beispiel 6

| Herbizid | Safener | Dosis [g AS/ha] | % Schädigung an Mais |
|---|---|---|---|
| SH3 | -- | 400 | 50 |
| | | 200 | 30 |
| | | 100 | 10 |
| " | + B1-8 | 400 + 200 | 10 |
| | | 200 + 100 | 0 |
| | | 100 + 50 | 0 |
| Abkürzungen: AS = Aktive Substanz (bezogen auf reinen Wirkstoff) SH3 = 3-(4,6-Dimethoxypyrimidin-2-yl)-1-[6-methyl-3-(N-methyl-N-methylsulfonyl-amino)-2-pyridyl-sulfonyl]-harnstoff (Beispiel für ein Herbizid der Gruppe 5c) Applikationsbedingungen: Freilandtopfversuch | | | |

## Patentansprüche

1. Herbizide Mittel, **dadurch gekennzeichnet, daß** sie
A) ein oder mehrere Herbizide aus der Gruppe der Sulfonylharnstoffe und Imidazolinone und
B) eine oder mehrere Verbindungen der Formel B1, 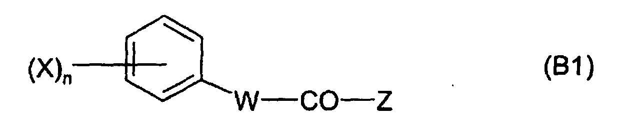
worin
X Wasserstoff, Halogen, C₁-C₄-Alkyl, C₁-C₄-Alkoxy, Nitro oder C₁-C₄-Halogenalkyl ist,
Z OR¹, SR¹ oder NR¹R,
R xunabhängig von R¹ Wasserstoff, C₁-C₆-Alkyl, C₁-C₆-Alkoxy oder Phenyl oder substituiertes Phenyl ist oder
R und R¹ gemeinsam mit dem an sie gebundenen N-Atom einen gesättigten oder ungesättigten 3- bis 7-gliedrigen Heterocyclus mit mindestens einem N-Atom und bis zu 3 Heteroatomen bedeuten, der unsubstituiert oder durch Reste aus der Gruppe C₁-C₄-Alkyl, C₁-C₄-Alkoxy, Phenyl oder substituiertes Phenyl substituiert ist,
R¹ xunabhängig von R Wasserstoff, C₁-C₁₈-Alkyl, C₃-C₁₂-Cycloalkyl, C₂-C₈-Alkenyt oder C₂-C₈-Alkinyl ist,
wobei jeder vorstehenden C-haltigen Reste unabhängig voneinander unsubstituiert oder ein- oder mehrfach durch Reste aus der Gruppe enthaltend Halogen, Hydroxy, C₁-C₈-Alkoxy, C₁-C₈-Alkylthio, C₂-C₈-Alkenylthio, C₂-C₈-Alkinylthio, C₂-C₈-Alkenyloxy, C₂-C₈-Alkinyloxy, C₃-C₇-Cycloalkyl, C₃-C₇-Cycloalkoxy, Cyano, Mono- und Di-(C₁-C₄-alkyl)-amino, (C₁-C₈-Alkoxy)-carbonyl, (C₂-C₈-Alkenyloxy)-carbonyl, (C₁-C₈-Alkylthio)-carbonyl, (C₂-C₈-Alkinyloxy)-carbonyl, (C₁-C₈-Alkyl)-carbonyl, (C₂-C₈-Alkenyl)-carbonyl, (C₂-C₈-Alkinyl)-carbonyl, 1-(Hydroxyimino)-C₁-C₆-alkyl, 1-(C₁-C₄-Alkylimino)-C₁-C₆-alkyl, 1-(C₁-C₄-Alkoxyimino)-C₁-C₆-alkyl, (C₁-C₈-Alkyl)-carbonylamino, (C₂-C₈-Alkenyl)-carbonylamino, (C₂-C₈-Alkinyl)-carbonylamino, Aminocarbonyl, (C₁-C₈-Alkyl)-aminocarbonyl, Di-(C₁-C₆-alkyl)-aminocarbonyl, (C₂-C₆-Alkenyl)-aminocarbonyl, (C₂-C₆-Alkinyl)-aminocarbonyl, (C₁-C₈-Alkoxy)-carbonylamino, (C₁-C₈-Alkyl)-amino-carbonylamino, C₁-C₆-Alkylcarbonyloxy, das unsubstituiert oder durch Halogen, NO₂, C₁-C₄-Alkoxy oder gegebenenfalls substituiertes Phenyl substituiert ist, (C₂-C₆-Alkenyl)-carbonyloxy, (C₂-C₆-Alkinyl)-carbonyloxy, C₁-C₈-Alkylsulfonyl, Phenyl, Phenyl-C₁-C₆-alkoxy, Phenyl-(C₁-C₆-alkoxy)-carbonyl, Phenoxy, Phenoxy-C₁-C₆alkoxy, Phenoxy-(C₁-C₆-alkoxy)-carbonyl, Phenylcarbonyloxy, Phenylcarbonylamino, Phenyl-(C₁-C₆-alkyl)-carbonylamino, wobei die letztgenannten 9 Reste im Phenylring unsubstituiert oder ein- oder mehrfach durch Reste aus der Gruppe Halogen, C₁-C₄-Alkyl, C₁-C₄-Alkoxy, C₁-C₄-Halogenalkyl, C₁-C₄-Halogenalkoxy and Nitro substituiert sind, und Reste der Formeln -SiR' -O-SiR'₃, (R')₃Si-C₁-C₈-alkoxy, -CO-O-NR'₂, -O-N=CR'₂, -N=CR'₂, -O-NR'₂, -CH(OR')₂ und -O-(CH₂)ₘ-CH(OR')₂, worin die R' in den genannten Formeln unabhängig voneinander Wasserstoff, C₁-C₄-Alkyl oder Phenyl, das unsubstituiert oder ein- oder mehrfach durch Reste aus der Gruppe Halogen, C₁-C₄-Alkyl, C₁-C₄-Alkoxy, C₁-C₄-Halogenalkyl, C₁-C₄-Halogenalkoxy und Nitro substituiert ist, oder paarweise eine C₂-C₆-Alkylenkette und m = 0 bis 6 bedeuten, und einen Alkoxyrest der Formel R"O-CHR"'(OR")-C₁-C₆-alkoxy, worin die R" unabhängig voneinander C₁-C₄-Alkyl oder zusammen eine C₁-C₆-Alkylengruppe und R"' Wasserstoff oder C₁-C₄-Alkyl bedeuten, substituiert ist,
n eine ganze Zahl von 1 bis 5 und
W ein divalenter heterocyclischer Rest mit 5 Ringatomen der Formel W1 bis W3 ist, 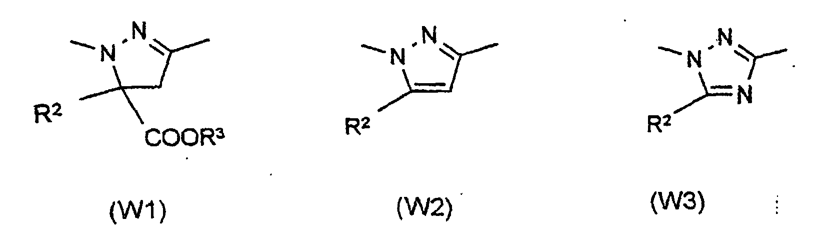 worin
R² Wasserstoff, C₁-C₈-Alkyl, C₁-C₈-Haloalkyl, C₃-C₁₂-Cycloalkyl oder gegebenfalls substituiertes Phenyl und
R³ Wasserstoff, C₁-C₈-Alkyl, C₁-C₈-Haloalkyl, (C₁-C₄-Alkoxy)-C₁-C₄-alkyl, C₁-C₆-Hydroxyalkyl, C₃-C₁₂-Cycloalkyl oder Tri-(C₁-C₄-alkyl)-silyl sind,
in einer wirksamen Menge enthalten.

2. Mittel nach Anspruch 1, **dadurch gekennzeichnet, daß**
R¹ Wasserstoff, C₁-C₁₂-Alkyl, C₃-C₇-Cycloalkyl, C₂-C₈-Alkenyl oder C₂-C₈-Alkinyl ist,
wobei jeder der vorstehenden C-haltigen Reste unabhängig voneinander unsubstituiert oder ein- oder mehrfach durch Halogen oder ein- oder zweifach, vorzugsweise bis zu einfach durch Reste aus der Gruppe enthaltend Hydroxy, C₁-C₄-Alkoxy, C₁-C₄-Alkylthio, C₂-C₄-Alkenyloxy, C₂-C₄-Alkinyloxy, Mono- und Di-(C₁-C₂-alkyl)-amino, (C₁-C₄-Alkoxy)-carbonyl, (C₂-C₄-Alkenyloxy)-carbonyl, (C₂-C₄-Alkinyloxy)-carbonyl, (C₁-C₄-Alkyl)-carbonyl, (C₂-C₄-Alkenyl)-carbonyl, (C₂-C₄-Alkinyl)-carbonyl, 1-(Hydroxyimino)-C₁-C₄alkyl, 1-(C₁-C₄-Alkylimino)-C₁-C₄-alkyl, 1-(C₁-C₄-Alkoxyimino)-C₁-C₄-alkyl, C₁-C₄-Alkylsulfonyl, Phenyl, Phenyl-C₁-C₄-alkoxy, Phenyl-(C₁-C₄-alkoxy)-carbonyl, Phenoxy, Phenoxy-C₁-C₄-alkoxy, Phenoxy-(C₁-C₄-alkoxy)-carbonyl, wobei die letztgenannten 6 Reste im Phenylring unsubstituiert oder ein- oder mehrfach durch Reste aus der Gruppe Halogen, C₁-C₂-Alkyl, C₁-C₂-Alkoxy, C₁-C₂-Halogenalkyl, C₁-C₂-Halogenalkoxy und Nitro substituiert sind, und Reste der Formeln -SiR'₃, -O-N=CR'₂, -N=CR'₂ und -O-NR'₂, worin die R' in den genannten Formeln unabhängig voneinander Wasserstoff, C₁-C₂-Alkyl oder Phenyl, das unsubstituiert oder ein- oder mehrfach durch Reste aus der Gruppe Halogen, C₁-C₂-Alkyl, C₁-C₂-Alkoxy, C₁-C₂-Halogenalkyl, C₁-C₂-Halogenalkoxy und Nitro substituiert ist, oder paarweise eine C₄-C₅-Alkylenkette bedeuten, substituiert ist.

3. Mittel nach Anspruch 1 oder 2, **dadurch gekennzeichnet, daß** in den Verbindungen der Formeln B1
X Wasserstoff, Halogen, Methyl, Ethyl, Methoxy, Ethoxy oder C₁-C₂-Halogenalkyl, vorzugsweise Wasserstoff, Halogen oder C₁-C₂-Halogenalkyl
bedeutet.

4. Mittel nach Anspruch 1 oder 2, **dadurch gekennzeichnet, daß** in Verbindungen der Formel B1
X Wasserstoff, Halogen, Nitro oder C₁-C₄-Halogenalkyl ist,
n eine Zahl von 1 bis 3 ist,
Z ein Rest der Formel OR¹ ist,
R¹ Wasserstoff, C₁-C₈-Alkyl oder C₃-C₇-Cycloalkyl ist,
wobei jeder der vorstehenden C-haltigen Reste unabhängig voneinander unsubstituiert oder ein- oder mehrfach durch Reste aus der Gruppe Halogen oder ein- oder zweifach, vorzugsweise unsubstituiert oder einfach, durch Reste aus der Gruppe Hydroxy, C₁-C₄-Alkoxy, (C₁-C₄-Alkoxy)-carbonyl, C₂-C₆-Alkenyloxy-carbonyl, (C₂-C₆-Alkinyloxy)-carbonyl, 1-(Hydroxyimino)-C₁-C₄alkyl, 1-(C₁-C₄-Alkylimino)-C₁-C₄-alkyl, 1-(C₁-C₄-Alkoxyimino)-C₁-C₄-alkyl, und Reste der Formeln -SiR'₃, -O-N=CR'₂, -N=CR'₂ und -O-NR'₂, worin die R' in den genannten Formeln unabhängig voneinander Wasserstoff oder C₁-C₄-Alkyl oder paarweise eine C₄-C₅-Alkylenkette bedeuten, substituiert ist,
R² Wasserstoff, C₁-C₈-Alkyl, C₁-C₆-Haloalkyl, C₃-C₇-Cycloalkyl oder Phenyl ist und
R³ Wasserstoff, C₁-C₈-Alkyl, C₁-C₈-Haloalkyl, (C₁-C₄-Alkoxy)-C₁-C₄-alkyl, C₁-C₆-Hydroxyalkyl, C₃-C₇-Cydoalkyl oder Tri-(C₁-C₄-alkyl)-silyl ist.

5. Mittel nach Anspruch 1 oder 2 **dadurch gekennzeichnet, daß** in den Verbindungen der Formel B1
W W1.
X H, Halogen oder C₁-C₂-Halogenalkyl und n = 1-3, insbesondere (X)ₙ = 2,4-Cl₂,
Z ein Rest der Formel OR¹,
R¹ Wasserstoff, C₁-C₈-Alkyl, C₁-C₄-Haloalkyl, C₁-C₄-Hydroxyalkyl, C₃-C₇-Cycloalkyl, (C₁-C₄-Alkoxy)-C₁-C₄-alkyl, Tri-(C₁-C₂-alkyl)-silyl, vorzugsweise C₁-C₄-Alkyl,
R² Wasserstoff, C₁-C₈-Alkyl, C₁-C₄-Haloalkyl oder C₃-C₇-Cycloalkyl, vorzugsweise Wasserstoff oder C₁-C₄-Alkyl, und
R³ Wasserstoff, C₁-C₈-Alkyl, C₁-C₄-Haloalkyl, C₁-C₄-Hydroxyalkyl, C₃-C₇-Cycloalkyl, (C₁-C₄-Alkoxy)-C₁-C₄-alkyl oder Tri-(C₁-C₂-alkyl)-silyl, vorzugsweise H oder C₁-C₄-Alkyl,
bedeuten.

6. Mittel nach einem der Ansprüche 1 bis 3, **dadurch gekennzeichnet, daß**
R¹ C₁-C₄-Alkyl
bedeutet.

7. Mittel nach einem der Ansprüche 1 bis 6, **dadurch gekennzeichnet, daß** ein oder mehrere Herbizide aus der Gruppe enthaltend Phenylsulfonylharnstoffe, Thienyteulfonylharnstoffe, Pyrazolsulfonylharnstoffe, Sulfondiamidderivate, Pyridylsulfonylharnstoffe, Phenoxysulfonylhamstoffe und Imidazolinone enthalten.

8. Mittel nach einem der Ansprüche 1 bis 7, **dadurch gekennzeichnet, daß** sie ein oder mehrere Herbizide aus der Gruppe enthaltend Chlorimuron-ethyl, Nicosulfuron, DPX-E 9636, Amidosulfuron, Thiameturon-methyl, Primisulfuron, Pyridylsulfonylhamstoffe der Formel A1 oder deren Salze, 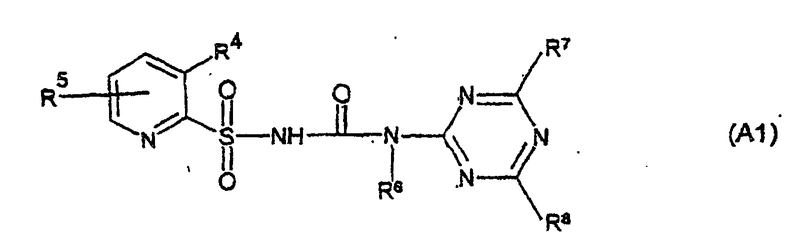 worin
E CH oder N
R⁴ lod oder NR⁹R¹⁰,
R⁵ H, Halogen, Cyano, C₁-C₃-Alkyl, C₁-C₃-Alkoxy, C₁-C₃-Haloalkyl, C₁-C₃-Haloalkoxy, C₁-C₃-Alkylthio, (C₁-C₃-Alkoxy)-C₁-C₃-alkyl, (C₁-C₃-Alkoxy)-carbonyl, Mono- oder Di-(C₁-C₃-alkyl)-amino, C₁-C₃-Alkyl-sulfinyl oder -sulfonyl, SO₂-NR^{a}R^{b} oder CO-NR^{a}R^{b},
R^{a},R^{b} unabhängig voneinander H, C₁-C₃-Alkyl, C₁-C₃-Alkenyl, C₁-C₃-Alkinyl oder zusammen -(CH₂)₄-, -(CH₂)₅- oder -(CH₂)₂-O-(CH₂)₂-,
R⁶ H oder CH₃,
R⁷ Halogen, C₁-C₂-Alkyl, C₁-C₂-Alkoxy, C₁-C₂-Haloalkyl, C₁-C₂-Haloalkoxy oder OCH₂CF₃,
R⁸ C₁-C₂-Alkyl, C₁-C₂-Haloalkoxy oder C₁-C₂-Alkoxy und
R⁹ C₁-C₄-Alkyl und R¹⁰ C₁-C₄-Alkylsulfonyl oder R⁹ und R¹⁰ gemeinsam eine Kette der Formel -(CH₂)₃SO₂- oder -(CH₂)₄SO₂-,
Alkoxyphenoxysulfonylharnstoffe der Formel A2 oder deren Salze, 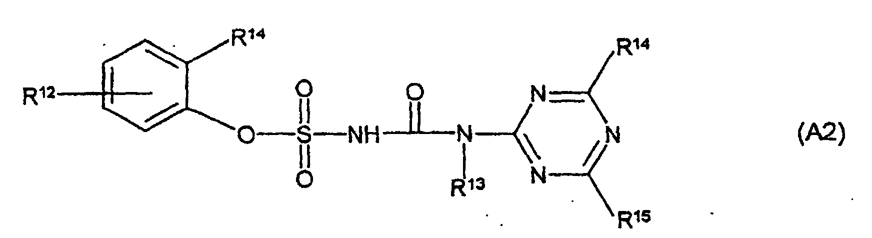 worin
E CH oder N,
R¹¹ Ethoxy, Propoxy oder Isopropoxy,
R¹² Wasserstoff, Halogen, NO₂, CF₃, CN, C₁-C₄-Alkyl, C₁-C₄-Alkoxy, C₁-C₄-Alkylthio oder (C₁-C₃-Alkoxy)-carbonyl,
n 1, 2 oder 3,
R¹³ Wasserstoff, C₁-C₄-Alkyl oder C₃-C₄-Alkenyl,
R¹⁴, R¹⁵ unabhängig voneinander Halogen, C₁-C₂-Alkyl, C₁-C₂-Alkoxy, C₁-C₂-Haloalkyl, C₁-C₂-Haloalkoxy oder (C₁-C₂-Alkoxy)-C₁-C₂-alkyl,
bedeuten,
3-(4-Ethyl-6-methoxy-1,3,5-triazin-2-yl)-1-(2,3-dihydro-1,1-dioxo-2-methylbenzo[b]thiophen-7-sulfonyl)-harnstoff,
3-(4-Ethoxy-6-ethyl-1,3,5-triazin-2-yl)-1-(2,3-dihydro-1,1-dioxo-2-methylbenzo[b]thiophen-7-sulfonyl)-harnstoff,
Imazethapyr, Imazaquin und Imazethamethabenz enthalten.

9. Mittel nach einem der Ansprüche 1 bis 8, **dadurch gekennzeichnet, daß** das Gewichtsverhältnis Safener:Herbizid im Bereich von 1:10 bis 10:1 liegen.

10. Mittel nach einem der Ansprüche 1 bis 9, **dadurch gekennzeichnet, daß** sie 0,1 bis 99 Gewichtsprozent Wirkstoffe der Typs B) oder des Antidot/Herbizid-Wirkstoffgemischs A) und B) und 1 bis 99,9 Gew.-% eines festen oder flüssigen Zusatzstoffes und 0 bis 25 Gew.-% eines Tensides enthalten.

11. Verfahren zum Schutz von Kulturpflanzen vor phytotoxischen Nebenwirkungen von Herbiziden des Typs A), wie sie in einem der Ansprüche 1, 7 oder 8 definiert sind, **dadurch gekennzeichnet ist, daß** eine wirksame Menge einer Verbindung der Formel (B1), wie sie in einem der Ansprüche 1 bis 6 definiert ist, vor, nach oder gleichzeitig mit dem Herbizid des genannten Typs A), auf die Pflanzen, Pflanzensamen oder die Anbaufläche appliziert wird.

12. Verfahren nach Anspruch 11, **dadurch gekennzeichnet, daß** die Kulturpflanzen Getreldepflanzen oder Maispflanzen sind.

13. Verfahren nach Ansprüche 11 oder 12, **dadurch gekennzeichnet, daß** der Safener vom Typ B) in einer Aufwandmenge von 0,001 bis 5 kg/ha Aktivsubstanz und einem Gewichtsverhältnis Safener:Herbizid im Bereich von 1:10 bis 10:1 apptiziert wird.

## Claims

1. A herbicidal composition which comprises an effective amount of
A) one or more herbicides from the group of the sulfonylureas and imidazolinones and
B) one or more compounds of the formula B1, 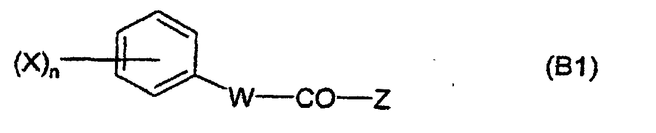 in which
X is hydrogen, halogen, C₁-C₄-alkyl, C₁-C₄-alkoxy, nitro or C₁-C₄-haloalkyl,
Z OR¹, SR¹ or NR¹R,
R independently of R₁ is hydrogen, C₁-C₆-alkyl, C₁-C₆- alkoxy or phenyl or substituted phenyl, or
R and R¹ together with the nitrogen atom linked to them is a saturated or unsaturated 3- to 7-membered heterocycle which has at least one nitrogen atom and up to 3 hetero atoms and which is unsubstituted or substituted by radicals selected from the group comprising C₁-C₄-alkyl, C₁-C₄-alkoxy, phenyl or substituted phenyl,
R¹ independently of R is hydrogen, C₁-C₁₈-alkyl, C₃-C₁₂- cycloalkyl, C₂-C₈-alkenyl or C₂-C₈-alkynyl,
each of the above carbon-containing radicals independently of one another being unsubstituted or monosubstituted or polysubstituted by radicals selected from the group comprising halogen, hydroxyl, C₁-C₈-alkoxy, C₁-C₈-alkylthio, C₂-C₈-alkenylthio, C₂-C₈-alkynylthio, C₂-C₈-alkenyloxy, C₂-C₈-alkynyloxy, C₃-C₇-cycloalkyl, C₃-C₇-cycloalkoxy, cyano, mono- and di-(C₁-C₄-alkyl)amino, (C₁-C₈-alkoxy)carbonyl, (C₂-C₈-alkenyloxy)carbonyl, (C₁-C₈-alkylthio)-carbonyl, (C₂-C₈-alkynyloxy)carbonyl, (C₁-C₈-alkyl) carbonyl, (C₂-C₈-alkenyl) carbonyl, (C₂-C₈-alkynyl)carbonyl, 1-(hydroxyimino)-C₁-C₆-alkyl, 1-(C₁-C₄-alkylimino) -C₁-C₆-alkyl, 1-(C₁-C₄-alkoxyimino)-C₁-C₆-alkyl, (C₁-C₈alkyl)-carbonylamino, (C₂-C₈-alkenyl)carbonylamino, (C₂-C₈-alkynyl)carbonylamino, aminocarbonyl, (C₁-C₈-alkyl)aminocarbonyl, di-(C₁-C₆-alkyl)-aminocarbonyl, (C₂-C₆-alkenyl)aminocarbonyl, (C₂-C₆-alkynyl)aminocarbonyl, (C₁-C₈-alkoxy)-carbonylamino, (C₁-C₈-alkyl)aminocarbonylamino, C₁-C₆-alkylcarbonyloxy which is unsubstituted or substituted by halogen, NO₂, C₁-C₄-alkoxy or optionally substituted phenyl, (C₂-C₆-alkenyl)-carbonyloxy, (C₂-C₆-alkynyl)carbonyloxy, C₁-C₈-alkylsulfonyl, phenyl, phenyl-C₁-C₆-alkoxy, phenyl-(C₁-C₆-alkoxy)carbonyl, phenoxy, phenoxy-C₁-C₆-alkoxy, phenoxy-(C₁-C₆-alkoxy)carbonyl, phenylcarbonyloxy, phenylcarbonylamino, phenyl-(C₁-C₆-alkyl)-carbonylamino, where the 9 last-mentioned radicals in the phenyl ring are unsubstituted or monosubstituted or polysubstituted by radicals from the group comprising halogen, C₁-C₄-alkyl, C₁-C₄-alkoxy, C₁-C₄-haloalkyl, C₁-C₄-haloalkoxy and nitro, and radicals of the formulae -SiR'₃, -O-SiR'₃, (R')₃Si-C₁-C₆-alkoxy, -CO-O-NR'₂, -O-N=CR'₂, -N=CR'₂, -O-NR'₂, -CH(OR')₂ and -O-(CH₂)ₘ-CH(OR')₂, where the R' radicals in the formulae mentioned independently of each other are hydrogen, C₁-C₄-alkyl or phenyl which is unsubstituted or monosubstituted or polysubstituted by radicals selected from the group comprising halogen, C₁-C₄-alkyl, C₁-C₄-alkoxy, C₁-C₄-haloalkyl, C₁-C₄-haloalkoxy and nitro, or, in pairs, are a C₂-C₆- alkylene chain and m = 0 to 6, and an alkoxy radical of the formula R"O-CHR'''(OR")-C₁-C₆-alkoxy where the R" radicals independently of each other are C₁-C₄-alkyl or together are a C₁-C₆-alkylene group, and R"' is hydrogen or C₁-C₄-alkyl,
n is an integer from 1 to 5 and
W is a divalent heterocyclic radical having 5 ring atoms of the formula W1 to W3, 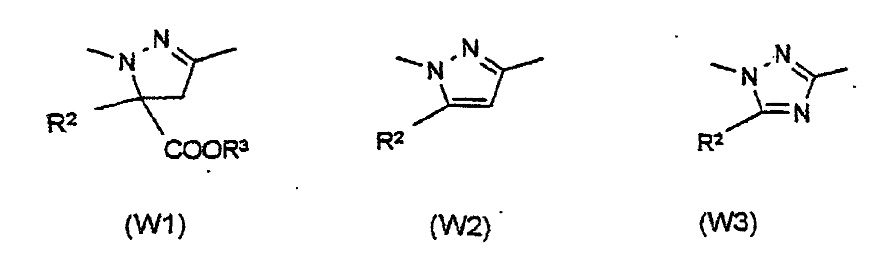 in which
R² is hydrogen, C₁-C₈-alkyl, C₁-C₈-haloalkyl, C₃-C₁₂-cycloalkyl or optionally substituted phenyl, and
R³ is hydrogen, C₁-C₈-alkyl, C₁-C₈-haloalkyl, (C₁-C₄-alkoxy) -C₁-C₄-alkyl, C₁-C₆-hydroxyalkyl, C₃-C₁₂-cycloalkyl or tri-(C₁-C₄-alkyl)silyl.

2. A composition as claimed in claim 1, wherein
R¹ is hydrogen, C₁-C₁₂-alkyl, C₃-C₇-cycloalkyl, C₂-C₈-alkenyl or C₂-C₈-alkynyl,
where each of the above carbon-containing radicals independently of each other is unsubstituted or monosubstituted or polysubstituted by halogen or monosubstituted or disubstituted, preferably up to monosubstituted, by radicals selected from the group comprising hydroxyl, C₁-C₄-alkoxy, C₁-C₄-alkylthio, C₂-C₄-alkenyloxy, C₂-C₄-alkynyloxy, mono- and di-(C₁-C₂-alkyl)amino, (C₁-C₄-alkoxy)carbonyl, (C₂-C₄-alkenyloxy)carbonyl, (C₂-C₄-alkynyloxy)-carbonyl, (C₁-C₄-alkyl)carbonyl, (C₂-C₄-alkenyl)-carbonyl, (C₂-C₄-alkynyl)carbonyl, 1-(hydroxyimino)-C₁-C₄-alkyl, 1- (C₁-C₄-alkylimino)-C₁-C₄-alkyl, 1- (C₁-C₄-alkoxyimino)-C₁-C₄-alkyl, C₁-C₄-alkylsulfonyl, phenyl, phenyl-C₁-C₄-alkoxy, phenyl-(C₁-C₄-alkoxy)carbonyl, phenoxy, phenoxy-C₁-C₄-alkoxy, phenoxy-(C₁-C₄-alkoxy)carbonyl, where the 6 last-mentioned radicals are unsubstituted or monosubstituted or polysubstituted in the phenyl ring by radicals selected from the group comprising halogen, C₁-C₂-alkyl, C₁-C₂-alkoxy, C₁-C₂-haloalkyl, C₁-C₂-haloalkoxy and nitro, and radicals of the formulae -SiR' ₃, -O-N=CR'₂, -N=CR'₂ and -O-NR'₂,
where the R' radicals in the formulae mentioned independently of each other are hydrogen, C₁-C₂-alkyl or phenyl which is unsubstituted or monosubstituted or polysubstituted by radicals selected from the group comprising halogen, C₁-C₂-alkyl, C₁-C₂-alkoxy, C₁-C₂-haloalkyl, C₁-C₂-haloalkoxy and nitro, or, in pairs, are a C₄-C₅-alkylene chain.

3. A composition as claimed in claim 1 or 2, wherein, in the compounds of the formula B1,
X is hydrogen, halogen, methyl, ethyl, methoxy, ethoxy or C₁-C₂-haloalkyl, preferably hydrogen, halogen or C₁-C₂-haloalkyl.

4. A composition as claimed in claim 1 or 2, wherein, in compounds of the formula B1,
X is hydrogen, halogen, nitro or C₁-C₄-haloalkyl,
n is a number from 1 to 3,
Z is a radical of the formula OR¹,
R¹ is hydrogen, C₁-C₈-alkyl or C₃-C₇-cycloalkyl,
where each of the above carbon-containing radicals independently of each other is unsubstituted or monosubstituted or polysubstituted by radicals selected from the group comprising halogen or monosubstituted or disubstituted, preferably unsubstituted or monosubstituted, by radicals selected from the group comprising hydroxyl, C₁-C₄-alkoxy, (C₁-C₄-alkoxy) carbonyl, C₂-C₆-alkenyloxycarbonyl, (C₂-C₆-alkynyloxy)carbonyl, 1- (hydroxyimino)-C₁-C₄-alkyl, 1-(C₁-C₄-alkylimino)-C₁-C₄-alkyl, 1-(C₁-C₄-alkoxyimino)-C₁-C₄-alkyl, and radicals of the formulae -SiR'₃, -O-N=CR'₂, -N=CR'₂ and -O-NR'₂, in which the R' radicals in the formulae mentioned independently of each other are hydrogen or C₁-C₄-alkyl or, in pairs, are a C₄-C₅-alkylene chain,
R² is hydrogen, C₁-C₈-alkyl, C₁-C₆-haloalkyl, C₃-C₇-cycloalkyl or phenyl and
R³ is hydrogen, C₁-C₈-alkyl, C₁-C₈-haloalkyl, (C₁-C₄-alkoxy) -C₁-C₄-alkyl, C₁-C₆-hydroxyalkyl, C₃-C₇-cycloalkyl or tri-(C₁-C₄-alkyl)silyl.

5. A composition as claimed in claim 1 or 2, wherein, in the compounds of the formula B1,
W is W1,
X is H, halogen or C₁-C₂-halogenoalkyl and n = 1-3,
in particular (X)ₙ = 2,4-Cl₂
Z is a radical of the formula OR¹,
R¹ is hydrogen, C₁-C₈-alkyl, C₁-C₄-haloalkyl, C₁-C₄-hydroxyalkyl, C₃-C₇-cycloalkyl, (C₁-C₄-alkoxy)-C₁-C₄-alkyl, tri (C₁-C₂-alkyl)silyl, preferably C₁-C₄-alkyl,
R² is hydrogen, C₁-C₈-alkyl, C₁-C₄-haloalkyl or C₃-C₇-cycloalkyl, preferably hydrogen or C₁-C₄-alkyl, and
R³ is hydrogen, C₁-C₈-alkyl, C₁-C₄-haloalkyl, C₁-C₄-hydroxyalkyl, C₃-C₇-cycloalkyl, (C₁-C₄-alkoxy)-C₁-C₄-alkyl or tri (C₁-C₂-alkyl) silyl, preferably H or C₁-C₄-alkyl.

6. A composition as claimed in one of claims 1 to 3, wherein
R¹ is C₁-C₄-alkyl.

7. A composition as claimed in one of claims 1 to 6, which comprises one or more herbicides selected from the group comprising phenylsulfonylureas, thienylsulfonylureas, pyrazolesulfonylureas, sulfonediamide derivatives, pyridylsulfonylureas, phenoxysulfonylureas and imidazolinones.

8. A composition as claimed in one of claims 1 to 7, which comprises one or more herbicides selected from the group comprising chlorimuron-ethyl, nicosulfuron, DPX-E 9636, amidosulfuron, thiameturon-methyl, primisulfuron, pyridylsulfonylureas of the formula A1 or their salts, 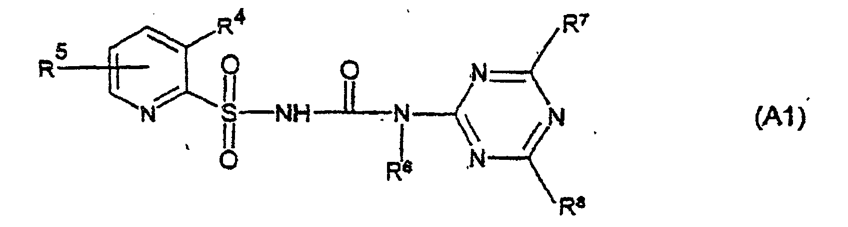 in which
E is CH or N,
R⁴ is iodine or NR⁹R¹⁰,
R⁵ is H, halogen, cyano, C₁-C₃-alkyl, C₁-C₃-alkoxy, C₁-C₃-haloalkyl, C₁-C₃-haloalkoxy, C₁-C₃-alkylthio, (C₁-C₃-alkoxy) -C₁-C₃-alkyl, (C₁-C₃-alkoxy)-carbonyl, mono- or di-(C₁-C₃-alkyl)-amino, C₁-C₃-alkyl-sulfinyl or -sulfonyl, SO₂-NR^{a}R^{b} or CO-NR^{a}R^{b},
R^{a} and R^{b} independently of each other are H, C₁-C₃-alkyl, C₁-C₃-alkenyl, C₁-C₃-alkynyl or together are-(CH₂)₄-,-(CH₂)₅- or-(CH₂)₂-O-(CH₂)₂-,
R⁶ is H or CH₃,
R⁷ is halogen, C₁-C₂-alkyl, C₁-C₂-alkoxy, C₁-C₂-haloalkyl, C₁-C₂-haloalkoxy or OCH₂CF₃,
R⁸ is C₁-C₂-alkyl, C₁-C₂-haloalkoxy or C₁-C₂-alkoxy and
R⁹ is C₁-C₄-alkyl and R¹⁰ is C₁-C₄-alkylsulfonyl or R⁹ and R¹⁰ together are a chain of the formula -(CH₂)₃SO₂- or -(CH₂)₄SO₂-,
alkoxyphenoxysulfonylureas of the formula A2 or their salts 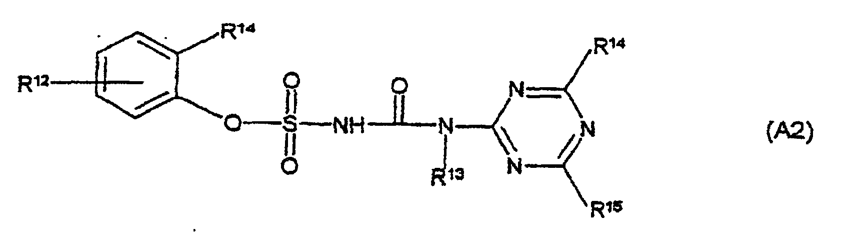 in which
E is CH or N,
R¹¹ is ethoxy, propoxy or isopropoxy,
R¹² is hydrogen, halogen, NO₂, CF₃, CN, C₁-C₄-alkyl, C₁-C₄-alkoxy, C₁-C₄-alkylthio or (C₁-C₃-alkoxy)-carbonyl,
n is 1, 2 or 3,
R¹³ is halogen, C₁-C₄-alkyl or C₃-C₄-alkenyl,
R¹⁴and R¹⁵ independently of each other are halogen, C₁-C₂-alkyl, C₁-C₂-alkoxy, C₁-C₂-haloalkyl, C₁-C₂-haloalkoxy or (C₁-C₂-alkoxy)-C₁-C₂-alkyl,
3-(4-ethyl-6-methoxy-1,3,5-triazin-2-yl)-1-(2,3-dihydro-1,1-dioxo-2-methylbenzo[b]thiophen-7-sulfonyl)urea,
3-(4-ethoxy-6-ethyl-1,3,5-triazin-2-yl)-1-(2,3-dihydro-1,1-dioxo-2-methylbenzo[b]thiophen-7-sulfonyl)urea,
imazethapyr, imazaquin and imazethamethabenz.

9. A composition as claimed in one of claims 1 to 8, wherein the ratio by weight of safener:herbicide is in a range from 1:10 to 10:1.

10. A composition as claimed in one of claims 1 to 9, which comprises 0.1 to 99 percent by weight of active substances of the B) type or of the antidote/herbicide active substance mixture A) and B), and 1 to 99.9% by weight of a solid or liquid additive and 0 to 25% by weight of a surfactant.

11. A method of protecting crop plants against phytotoxic secondary effects of herbicides of the A) type as are defined in one of claims 1, 7 or 8, which comprises applying an effective amount of a compound of the formula (B1), as is defined in one of claims 1 to 6, to the plants, seeds of the plants or the area under cultivation, before, after or simultaneously with, the herbicide of the type A) mentioned.

12. A method as claimed in claim 11, wherein the crop plants are cereal plants or corn plants.

13. A method as claimed in claim 11 or 12, wherein the B) type safener is applied at an application rate of 0.001 to 5 kg of active ingredient/ha and a ratio by weight of safener:herbicide in a range from 1:10 to 10:1.

## Revendications

1. Agents herbicides **caractérisés en ce qu'**ils contiennent:
A) un ou plusieurs herbicides du groupe des sulfonyl-urées et des imidazolinones et
B) un ou plusieurs composés de formule B1, 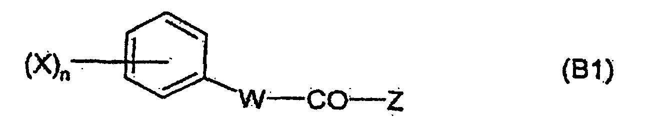
dans laquelle
X représente un atome d'hydrogène, un atome d'halogène, des groupes alkyle en C₁-C₄, alkoxy en C₁-C₄, nitro ou haloalkyle en C₁-C₄,
Z représente des groupes OR¹, SR¹ ou NR¹R,
R représente indépendamment de R¹ un atome d'hydrogène, des groupes alkyle en C₁-C₆, alkoxy en C₁-C₆ ou phényle ou phényle substitué ou
R et R¹ représentent ensemble avec l'atome d'azote auquel ils sont liés un hétérocycle saturé ou insaturé de 3 à 7 chaînons avec au moins un atome d'azote et jusqu'à 3 hétéroatomes qui est non substitué ou substitué par des restes pris dans le groupe comprenant alkyle en C₁-C₄, alkoxy en C₁-C₄, phényle ou phényle substitué,
R¹ représente indépendamment de R un atome d'hydrogène, un groupe alkyle en C₁-C₁₈, cycloalkyle en C₃-C₁₂, alcényle en C₂-C₈ ou alcynyle en C₂-C₈,
où chaque reste carboné précédent indépendamment des autres est non substitué ou substitué une ou plusieurs fois par des restes pris dans le groupe comprenant des restes halogène, hydroxy, alkoxy en C₁-C₈, (alkyl en C₁-C₈)thio, (alcényl en C₂-C₈)thio, (alcynyl en C₂-C₈)thio alcényloxy en C₂-C₈, alcynyloxy en C₂-C₈, cycloalkyle en C₃-C₇, cycloalkoxy en C₃-C₇, cyano, mono- et di-(alkyl en C₁-C₄)amino, (alkoxy en C₁-C₈) -carbonyle, (alcényloxy en C₂-C₈)-carbonyle, (alkylthio en C₁-C₈)-carbonyle, (alcynyloxy en C₂-C₈)-carbonyle, (alkyl en C₁-C₈)-carbonyle, (alcényl en C₂-C₈)-carbonyle, (alcynyl en C₂-C₈)-carbonyle, 1-(hydroxyimino)-alkyle en C₁-C₆, 1-(alkylimino en C₁-C₄)-alkyle en C₁-C₆, 1-(alkoxyimino en C₁-C₄)-alkyle en C₁-C₆, (alkyl en C₁-C₈)-carbonylamino, (alcényl en C₂-C₈)-carbonylamino, (alcynyl en C₂-C₈)-carbonylamino, aminocarbonyle, (alkyl en C₁-C₈)-aminocarbonyle, di-(alkyl en C₁-C₆)-aminocarbonyle, (alcényl en C₂-C₆)-aminocarbonyle, (alcynyl en C₂-C₆)-aminocarbonyle, (alkoxy en C₁-C₈)-carbonylamino, (alkyl en C₁-C₈)-amino-carbonylamino, alkylcarbonyloxy en C₁-C₆, qui est non substitué ou substitué par des substituants d'halogène, NO₂, alkoxy en C₁-C₄ ou phényle le cas échéant substitué, (alcényl en C₂-C₆)-carbonyloxy, (alcinyl en C₂-C₆)-carbonyloxy, alkylsulfonyle en C₁-C₈, phényle, phényl-alkoxy en C₁-C₆, phényl-(alkoxy en C₁-C₆)-carbonyle, phénoxy, phénoxy-alkoxy en C₁-C₆, phénoxy-(alkoxy en C₁-C₆)-carbonyle, phénylcarbonyloxy, phénylcarbonylamino, phényl-(alkyl en C₁-C₆)-carbonylamino, où les 9 derniers restes cités sont non substitués ou substitués dans le cycle phénylique une ou plusieurs fois par des restes pris dans le groupe comprenant halogènes, alkyle en C₁-C₄, alkoxy en C₁-C₄, halogéno-alkyle en C₁-C₄, halogéno-alkoxy en C₁-C₄ et nitro, et des restes de formules -SiR'₃, -O-SiR'₃, (R')₃Si-alkoxy en C₁-C₆, -CO-O-NR'₂, -O-N=CR'₂, -N=CR'₂, -O-NR"₂, -CH(OR')₂ et -O-(CH₂)ₘ-CH(OR')₂, dans lesquels R' dans les formules nommées représentent indépendamment l'un de l'autre un atome d'hydrogène, un groupe alkyle en C₁-C₄ ou phényle qui est non substitué ou substitué une ou plusieurs fois par des restes pris dans le groupe comprenant halogènes, alkyle en C₁-C₄, alkoxy en C₁-C₄, haloalkyle en C₁-C₄, halo-alkoxy en C₁-C₄ et nitro, ou par couples une chaîne alkylène en C₂-C₆ et m = 0 à 6, et un reste alkoxy de formule R"O-CHR"'(OR")-alkoxy en C₁-C₆, dans lequel R" représentent indépendamment l'un de l'autre un groupe alkyle en C₁-C₄ ou ensemble un groupe alkylène en C₁-C₆ et R'" représente un atome d'hydrogène ou un groupe alkyle en C₁-C₄,
n est un nombre entier de 1 à 5 et
W représente un reste hétérocyclique divalent avec 5 atomes nucléaires de formules W1 à W3, 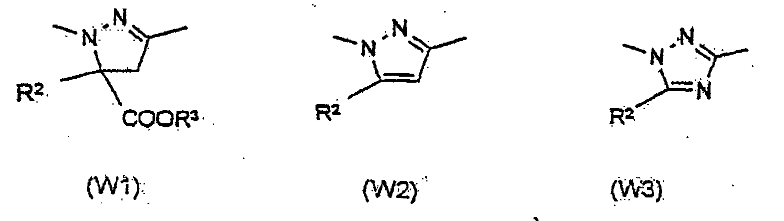 dans lesquelles
R² représente un atome d'hydrogène, des groupes alkyle en C₁-C₈, haloalkyle en C₁-C₈, cycloalkyle en C₃-C₁₂ ou phényle le cas échéant substitué et,
R³ représente un atome d'hydrogène, des groupes alkyle en C₁-C₈, haloalkyle en C₁-C₈, (alkoxy en C₁-C₄)-alkyle en C₁-C₄, hydroxyalkyle en C₁-C₆, cycloalkyle en C₃-C₁₂ ou tri-(alkyl en C₁-C₄)-silyle, dans une quantité efficace.

2. Agents selon la revendication 1, **caractérisés en ce que**
R¹ représente un atome d'hydrogène, un groupe alkyle en C₁-C₁₂, cycloalkyle en C₃-C₇, alcényle en C₂-C₈ ou alcynyle en C₂-C₈,
où chacun des restes carbonés précédents indépendamment l'un de l'autre est non substitué ou substitué une ou plusieurs fois par un atome d'halogène ou une ou deux fois, de préférence jusqu'à une fois par des restes pris dans le groupe comprenant hydroxy, alkoxy en C₁-C₄, (alkyl en C₁-C₄)thio, alcényloxy en C₂-C₄, alcynyloxy en C₂-C₄, mono- et di-(alkyl en C₁-C₂)-amino, (alkoxy en C₁-C₄)-carbonyle, (alcényloxy en C₂-C₄)-carbonyle, (alcynyloxy en C₂-C₄)-carbonyle, (alkyl en C₁-C₄)-carbonyle, (alcényl en C₂-C₄)-carbonyle, (alcynyl en C₂-C₄)-carbonyle, 1-(hydroxyimino)-alkyle en C₁-C₄, 1-(alkylimino en C₁-C₄)-alkyle en C₁-C₄, 1-(alkoxyimino en C₁-C₄)-alkyle en C₁-C₄, (alkyl en C₁-C₄)sulfonyle, phényle, phénylalkoxy en C₁-C₄, phényl-(alkoxy en C₁-C₄)-carbonyle, phénoxy, phénoxy-alkoxy en C₁-C₄, phénoxy-(alkoxy en C₁-C₄)-carbonyle, où les 6 derniers restes cités sont non substitués ou substitués dans le cycle phénylique une ou plusieurs fois par des restes pris dans le groupe comprenant halogènes, alkyle en C₁-C₂, alkoxy en C₁-C₂, halo-alkyle en C₁-C₂, halo-alkoxy en C₁-C₂ et nitro et des restes des formules -SiR'₃, -O-N=CR'₂, -N=CR'₂ et -O-NR'₂ dans lesquels R' représentent dans les formules nommées indépendamment l'un de l'autre un atome d'hydrogène, un groupe alkyle en C₁-C₂ ou phényle qui est non substitué ou substitué une ou plusieurs fois par des restes de l'ensemble des halogènes, des groupes alkyle en C₁-C₂, alkoxy en C₁-C₂, halo-alkyle en C₁-C₂, halo-alkoxy en C₁-C₂ et nitro, ou par couples une chaîne alkylène en C₄-C₅.

3. Agents selon la revendication 1 ou 2, **caractérisés en ce que** dans les composés de formules B1
X représente un atome d'hydrogène, un atome d'halogène, des groupes méthyle, éthyle, méthoxy, éthoxy ou haloalkyle en C₁-C₂, de préférence un atome d'hydrogène, un atome d'halogène ou un groupe haloalkyle en C₁-C₂.

4. Agents selon la revendication 1 ou 2, **caractérisés en ce que** dans les composés de formule B1
X représente un atome d'hydrogène, un atome d'halogène, un groupe nitro ou halo-alkyle en C₁-C₄,
n est un entier de 1 à 3,
Z représente un reste de formule OR¹,
R¹ représente un atome d'hydrogène, un groupe alkyle en C₁-C₈ ou cycloalkyle en C₃-C₇,
où chacun des restes carbonés précédents indépendamment l'un de l'autre est non substitué ou substitué une ou plusieurs fois par des restes pris parmi les atomes d'halogène, ou une ou deux fois, de préférence non substitué ou substitué une fois par des restes pris dans le groupe comprenant hydroxy, alkoxy en C₁-C₄, (alkoxy en C₁-C₄)-carbonyle, (alcényl en C₂-C₆)-oxycarbonyle, (alcynyl en C₂-C₆)oxycarbonyle, 1-(hydroxyimino)-alkyle en C₁-C₄, 1-(alkylimino en C₁-C₄)-alkyle en C₁-C₄, 1-(alkoxyimino en C₁-C₄)-alkyle en C₁-C₄, et des restes des formules -SiR'₃, -O-N=CR'₂, -N=CR'₂ et -O-NR'₂ dans lesquels R' représentent dans les formules citées indépendamment l'un de l'autre un atome d'hydrogène ou un groupe alkyle en C₁-C₄ ou par couples une chaîne alkylène en C₄-C₅,
R² représente un atome d'hydrogène, un groupe alkyle en C₁-C₈, haloalkyle en C₁-C₆, cycloalkyle en C₃-C₇ ou phényle et,
R³ représente un atome d'hydrogène, des groupes alkyle en C₁-C₈, haloalkyle en C₁-C₈, (alkoxy en C₁-C₄)-alkyle en C₁-C₄, hydroxyalkyle en C₁-C₆, cycloalkyle en C₃-C₇ ou tri-(alkyle en C₁-C₄)-silyle.

5. Agents selon la revendication 1 ou 2, **caractérisés en ce que** dans les composés de formule B1
W représente W1,
X représente un atome d'hydrogène, un atome d'halogène
ou un groupe halo-alkyle en C₁-C₂ et n = 1-3, en particulier (X)ₙ = 2,4-Cl₂,
Z représente un reste de formule OR¹,
R¹ représente un atome d'hydrogène, des groupes alkyle en C₁-C₈, haloalkyle en C₁-C₄, hydroxyalkyle en C₁-C₄, cycloalkyle en C₃-C₇, (alkoxy en C₁-C₄)-alkyle en C₁-C₄, tri-(alkyl en C₁-C₂)-silyle, de préférence alkyle en C₁-C₄,
R² xreprésente un atome d'hydrogène, des groupes alkyle en C₁-C₈, haloalkyle en C₁-C₄ ou cycloalkyle en C₃-C₇, de préférence un atome d'hydrogène ou un groupe alkyle en C₁-C₄,
R³ représente un atome d'hydrogène, des groupes alkyle en C₁-C₈, haloalkyle en C₁-C₄, hydroxyalkyle en C₁-C₄, cycloalkyle en C₃-C₇, (alkoxy en C₁-C₄)-alkyle en C₁-C₄, ou tri-(alkyl en C₁-C₂)-silyle, de préférence un atome d'hydrogène ou un groupe alkyle en C₁-C₄.

6. Agents selon l'une des revendications 1 à 3, **caractérisé en ce que** R¹ représente un groupe alkyle en C₁-C₄.

7. Agents selon l'une des revendications 1 à 6, **caractérisés en ce qu'**ils contiennent un ou plusieurs herbicides pris dans le groupe comprenant des phénylsulfonylurées, des thiénylsulfonylurées, des pyrazolsulfonylurées, des dérivés de sulfonediamides, des pyridylsulfonylurées, des phénoxysulfonylurées et des imidazolinones.

8. Agents selon l'une des revendications 1 à 7, **caractérisés en ce qu'**ils contiennent un ou plusieurs herbicides pris dans le groupe comprenant le chlorimuron-éthyl, le nicosulfuron, le DPX-E 9636, l'amidosulfuron, le thiameturon-méthyl, le primisulfuron, des pyridylsulfonylurées de formule A1 ou leurs sels, 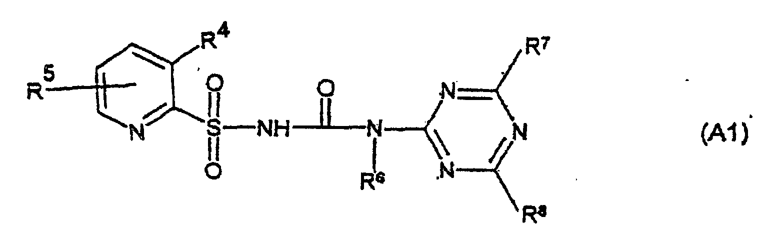 dans laquelle
E représente un groupe CH ou un atome d'azote,
R⁴ xreprésente un atome d'iode ou un groupe NR⁹R¹⁰,
R⁵ représente un atome d'hydrogène, un atome d'halogène, des groupes cyano, alkyle en C₁-C₃, alkoxy en C₁-C₃, haloalkyle en C₁-C₃, haloalkoxy en C₁-C₃, (alkyle en C₁-C₃)thio, (alkoxy en C₁-C₃)-alkyle en C₁-C₃, (alkoxy en C₁-C₃)-carbonyle, mono- ou di-(alkyl en C₁-C₃)-amino, (alkyl en C₁-C₃)-sulfinyle ou -sulfonyle, SO₂-NR^{a}R^{b} ou CO-NR^{a}R^{b},
R^{a}, R^{b} représentent indépendamment l'un de l'autre un atome d'hydrogène, des groupes alkyle en C₁-C₃, alcényle en C₁-C₃, alcynyle en C₁-C₃ ou ensemble un groupe -(CH₂)₄-, -(CH₂)₅- ou -(CH₂)₂-O-(CH₂)₂-,
R⁶ représente un atome d'hydrogène ou un groupe CH₃,
R⁷ xreprésente un atome d'halogène, un groupe alkyle en C₁-C₂, alkoxy en C₁-C₂, haloalkyle en C₁-C₂, haloalkoxy en C₁-C₂, ou OCH₂CF₃,
R⁸ représente un groupe alkyle en C₁-C₂, haloalkoxy en C₁-C₂ ou alkoxy en C₁-C₂, et
R⁹ représente un groupe alkyle en C₁-C₄ et R¹⁰ un groupe alkylsulfonyle en C₁-C₄ ou R⁹ et R¹⁰ ensemble une chaîne de formule, -(CH₂)₃SO₂- ou - (CH₂)₄SO₂-,
des alkoxyphénoxysulfonylurées de formule A2 ou leurs sels, 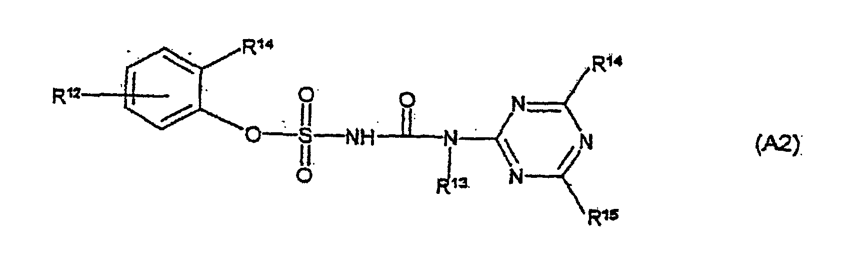 dans laquelle
E représente un groupe CH ou un atome d'azote,
R¹¹ représente des groupes éthoxy, propoxy ou isopropoxy,
R¹² représente un atome d'hydrogène, un atome d'halogène, des groupes NO₂, CF₃, CN, alkyle en C₁-C₄, alkoxy en C₁-C₄, (alkyl en C₁-C₄)thio ou (alkoxy en C₁-C₃)-carbonyle,
n vaut 1, 2 ou 3,
R¹³ représente un atome d'hydrogène, un groupe alkyle en C₁-C₄ ou alcényle en C₃-C₄,
R¹⁴, R¹⁵ xreprésentent indépendamment l'un de l'autre un atome d'halogène, un groupe alkyle en C₁-C₂, alkoxy en C₁-C₂, haloalkyle en C₁-C₂, haloalkoxy en C₁-C₂ ou (alkoxy en C₁-C₂)-alkyle en C₁-C₂, la 3-(4-éthyl-6-méthoxy-1,3,5-triazin-2-yl)-1-(2,3-dihydro-1,1-dioxo-2-méthylbenzo[b]thiophèn-7-sulfonyl)-urée , la 3- (4-éthoxy-6-éthyl-1,3,5-triazin-2-yl) -1- (2, 3-dihydro-1,1-dioxo-2-méthyl-benzo[b]thiophèn-7-sulfonyl)-urée, l'imazethapyr, l'imazaquine, l'imazethamethabenz.

9. Agents selon l'une des revendications 1 à 8, **caractérisés en ce que** le rapport en poids safener:herbicide se trouve dans l'intervalle 1:10 à 10:1.

10. Agents selon l'une des revendications 1 à 9, **caractérisés en ce qu'**ils contiennent 0,1 à 99 % en poids de substances actives du type B) ou du mélange d'antidote/substances actives herbicides A) et B) et 1 à 99,9 % en poids d'un additif solide ou liquide et 0 à 25 % en poids d'un agent de surface.

11. Procédé pour la protection des plantes de culture contre les effets secondaires phytotoxiques des herbicides du type A), comme ils sont définis dans l'une des revendications 1, 7 ou 8 **caractérisé en ce que** l'on applique une quantité efficace d'un composé de formule (B1), comme elle est définie dans l'une des revendications 1 à 6, avant, après ou en même temps, avec l'herbicide du type A) cité, sur les plantes, les graines de plantes ou les surfaces cultivées.

12. Procédé selon la revendication 11, **caractérisé en ce que** les plantes cultivées sont des plantes de céréales ou de maïs.

13. Procédé selon les revendications 11 ou 12, **caractérisé en ce que** l'on applique le safener de type B) dans une concentration d'emploi de 0,001 à 5 kg/ha de substance active et une proportion en poids safener:herbicide dans l'intervalle de 1:10 à 10:1.
